# EUROPEAN PATENT APPLICATION

(11) **EP 4 491 682 A1**
(43) Date of publication of application: **15.01.2025**
(21) Application number: 23766633.4
(22) Date of filing: 27.02.2023
(51) Int. Cl.: C09D 11/30, C09D 11/40, B41M 5/00, B41J 2/01

(54) **INKJET INK, INK SET, AND INKJET RECORDING METHOD**

(30) Priority: 07.03.2022 JP 2022034673
(71) Applicant: FUJIFILM Corporation, Tokyo 106-8620 (JP)
(72) Inventor: SHIMOYAMA, Tatsuya, Ashigarakami-gun, Kanagawa 258-8577 (JP); KARIYA, Toshihiro, Ashigarakami-gun, Kanagawa 258-8577 (JP); HONGO, Yushi, Ashigarakami-gun, Kanagawa 258-8577 (JP); SHINOHARA, Ryuji, Ashigarakami-gun, Kanagawa 258-8577 (JP)
(74) Representative: Klunker IP Patentanwälte PartG mbB
(86) International application number: PCT/JP2023/007164
(87) International publication number: WO 2023/171455

(57) **Abstract**

Provided is an ink jet ink including water, a pigment, a surfactant (A) which is an acetylene glycol-based nonionic surfactant, a surfactant (B) which is a compound represented by Formula (1), and an organic solvent (C), in which the organic solvent (C) includes a glycol ether (c-1) which is at least one selected from the group consisting of an alkylene glycol monoalkyl ether having a boiling point of 250°C or lower and a polyalkylene glycol monoalkyl ether having a boiling point of 250°C or lower. In Formula (1), R¹ and R² each independently represent a branched alkyl group having 3 to 20 carbon atoms, and n represents an integer of 1 to 20.

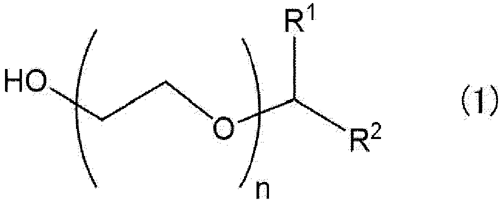

## Description

### BACKGROUND OF THE INVENTION

### 1. Field of the Invention

The present disclosure relates to an inkjet ink, an ink set, and an inkjet recording method.

### 2. Description of the Related Art

In the related art, ink jet recording (that is, image recording by an ink jet recording method) has been performed by allowing an ink jet ink used for ink jet recording to contain a surfactant.

For example, JP2020-169286A discloses, as an aqueous ink jet ink having excellent jettability and capable of forming a high-definition image on a low-absorbing base material or a non-absorbing base material, an aqueous ink jet ink which contains at least one organic solvent selected from the group consisting of glycols, monoalcohols, and alkanediols, and a surfactant having a specific structure.

### SUMMARY OF THE INVENTION

In a case where an image is recorded using an ink jet ink (hereinafter, also simply referred to as "ink"), the graininess of the image may be reduced (that is, the image may have granularity (roughness)). In an image recorded using inks of two or more colors, color mixture (hereinafter, also referred to as intercolor mixture) may occur between the inks of two or more colors even in a case where the image has excellent graininess.

An object of an aspect of the present disclosure is to provide an inkjet ink, an ink set, and an ink jet recording method, which enables recording of an image with excellent graininess (that is, suppressed granularity) and suppressed intercolor mixture.

The present disclosure includes the following aspects.
<1> An ink jet ink comprising: water; a pigment; a surfactant (A) which is an acetylene glycol-based nonionic surfactant; a surfactant (B) which is a compound represented by Formula (1); and an organic solvent (C), in which the organic solvent (C) includes a glycol ether (c-1) which is at least one selected from the group consisting of an alkylene glycol monoalkyl ether having a boiling point of 250°C or lower and a polyalkylene glycol monoalkyl ether having a boiling point of 250°C or lower. 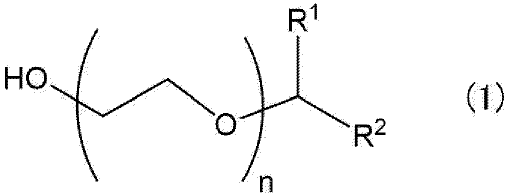 In Formula (1), R¹ and R² each independently represent a branched alkyl group having 3 to 20 carbon atoms, and n represents an integer of 1 to 20.
<2> The ink jet ink according to <1>, in which the surfactant (B) is a compound represented by Formula (1-1). 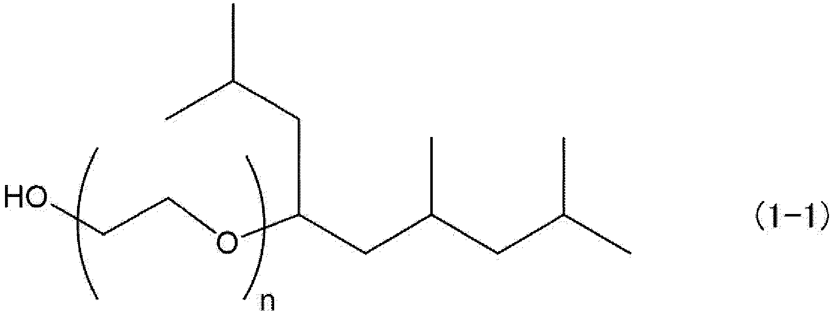 In Formula (1-1), n represents an integer of 1 to 20.
<3> The ink jet ink according to <1> or <2>, in which the surfactant (A) has an HLB value of 4 or greater and 12 or less.
<4> The inkjet ink according to any one of <1> to <3>, in which a content mass ratio [(c-1)/(B)] which is a ratio of a content mass of the glycol ether (c-1) to a content mass of the surfactant (B) is 1.5 or greater and 30 or less.
<5> The ink jet ink according to any one of <1> to <4>, in which a content of the surfactant (B) is 0.30% by mass or greater and 2.50% by mass or less with respect to a total amount of the inkjet ink.
<6> The ink jet ink according to any one of <1> to <5>, in which a content of the glycol ether (c-1) is 2.0% by mass or greater and 30.0% by mass or less with respect to a total amount of the ink jet ink.
<7> The ink jet ink according to any one of <1> to <6>, in which a content of the surfactant (A) is 0.30% by mass or greater and 2.50% by mass or less with respect to a total amount of the ink jet ink.
<8> The ink jet ink according to any one of <1> to <7>, in which a value obtained by dividing a content of the surfactant (A) in units of % by mass with respect to a total amount of the ink jet ink by an HLB value of the surfactant (A) is 0.040 or greater and 0.400 or less.
<9> The ink jet ink according to any one of <1> to <8>, in which a value obtained by dividing a content of the surfactant (B) in units of % by mass with respect to a total amount of the inkjet ink by an HLB value of the surfactant (B) is 0.022 or greater and 0.300 or less.
<10> The ink jet ink according to any one of <1> to <9>, in which the glycol ether (c-1) is at least one selected from the group consisting of an ethylene glycol monoalkyl ether having a boiling point of 250°C or lower, a diethylene glycol monoalkyl ether having a boiling point of 250°C or lower, a propylene glycol monoalkyl ether having a boiling point of 250°C or lower, and a dipropylene glycol monoalkyl ether having a boiling point of 250°C or lower.
<11> The ink jet ink according to any one of <1> to <10>, in which the organic solvent (C) further includes an alkanediol (c-2) which is an alkanediol having 2 or more and 6 or less carbon atoms.
<12> The ink jet ink according to any one of <1> to <11>, in which a content of the organic solvent (C) is 10.0% by mass or greater and 40.0% by mass or less with respect to a total amount of the ink j et ink.
<13> The ink jet ink according to any one of <1> to <12>, in which the ink jet ink contains no high-boiling-point organic solvent having a boiling point of higher than 250°C, or in a case where the ink jet ink contains the high-boiling-point organic solvent, a content of the high-boiling-point organic solvent is 5.0% by mass or less with respect to a total amount of the ink jet ink.
<14> The ink jet ink according to any one of <1> to <13>, further comprising: a surfactant (D) which is a polyether-modified silicone surfactant.
<15> The ink jet ink according to <14>, in which a content of the surfactant (D) is 0.05% by mass or greater and 1.50% by mass or less with respect to a total amount of the ink jet ink.
<16> The ink jet ink according to any one of <1> to <15>, further comprising: resin particles.
<17> An ink set comprising: two or more kinds of ink jet inks, in which at least one of the two or more kinds of ink jet inks is the ink jet ink according to any one of <1> to <16>.
<18> An ink jet recording method comprising: a step of applying the ink jet ink according to any one of <1> to <16> onto a recording medium by an inkjet method.
<19> An ink jet recording method using the ink set according to <17>, the method comprising: a step of applying each of the two or more kinds of ink jet inks onto a recording medium by an ink jet method.

According to one aspect of the present disclosure, it is possible to provide an inkjet ink, an ink set, and an ink jet recording method, which enables recording of an image with excellent graininess (that is, suppressed granularity) and suppressed intercolor mixture.

### DESCRIPTION OF THE PREFERRED EMBODIMENTS

In the present specification, a numerical range shown using "to" indicates a range including the numerical values described before and after "to" as a minimum value and a maximum value, respectively.

In a numerical range described in a stepwise manner in the present specification, an upper limit or a lower limit described in a certain numerical range may be replaced with an upper limit or a lower limit in another numerical range described in a stepwise manner. Further, in a numerical range described in the present specification, an upper limit or a lower limit described in a certain numerical range may be replaced with a value described in an example.

In the present specification, in a case where a plurality of substances corresponding to respective components in a composition are present, the amount of the respective components in the composition indicates the total amount of the plurality of substances present in the composition unless otherwise specified.

In the present specification, a combination of two or more preferred embodiments is a more preferred embodiment.

In the present specification, the meaning of the term "step" includes not only an independent step but also a step whose intended purpose is achieved even in a case where the step is not clearly distinguished from other steps.

In the present specification, the term "image" means general films, and the term "image recording" means formation of an image (that is, a film). Further, the concept of "image" in the present specification also includes a solid image.

In the present specification, the concept of "(meth)acrylate" includes both acrylate and methacrylate, and the concept of "(meth)acrylic acid" includes both acrylic acid and methacrylic acid.

In the present specification, "boiling point" is a boiling point under atmospheric pressure.

### [Ink jet ink]

An inkjet ink of the present disclosure (hereinafter, also simply referred to as "ink") contains water, a pigment, a surfactant (A) which is an acetylene glycol-based nonionic surfactant, a surfactant (B) which is a compound represented by Formula (1), and an organic solvent (C), in which the organic solvent (C) includes a glycol ether (c-1) which is at least one selected from the group consisting of an alkylene glycol monoalkyl ether having a boiling point of 250°C or lower and a polyalkylene glycol monoalkyl ether having a boiling point of 250°C or lower.

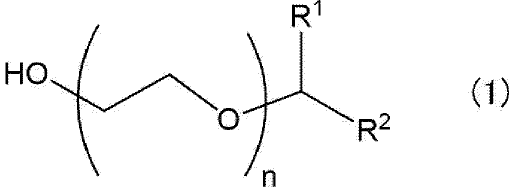

In Formula (1), R¹ and R² each independently represent a branched alkyl group having 3 to 20 carbon atoms, and n represents an integer of 1 to 20.

According to the ink of the present disclosure, an image with excellent graininess (that is, suppressed granularity) and suppressed intercolor mixture can be recorded.

The reason why the above-described effects are exhibited by the ink of the present disclosure is assumed as follows.

The effect of the graininess is considered to be an effect obtained by a combination of the surfactant (A) and the surfactant (B).

It is considered that improvement of the wettability of the ink is effective to obtain the effect of the graininess. In this terms, the surfactant (B) having a branched structure can contribute to the improvement of the wettability of the ink. It is considered that in a case where the surfactant (B) is used in combination with the surfactant (A), the surface aligning properties of the surfactant (B) at the gas-liquid interface are further enhanced in the ink applied onto the recording medium, and the wettability of the ink is further improved. As a result, the effect of improving the graininess is considered to be obtained by using the surfactant (A) and the surfactant (B) in combination.

Meanwhile, as a result of examination conducted by the present inventors, it has been found that the intercolor mixture is likely to occur in a case where an ink containing a combination of the surfactant (A) and the surfactant (B) is used. The reason for this is considered to be that the wettability of the ink may be excessive.

Therefore, the present inventors have found that both the improvement of graininess and the suppression of intercolor mixture can be achieved by further adding a glycol ether (c-1) which is at least one selected from the group consisting of an alkylene glycol monoalkyl ether having a boiling point of 250°C or lower and a polyalkylene glycol monoalkyl ether having a boiling point of 250°C or lower to the ink containing a combination of the surfactant (A) and the surfactant (B). The reason for this is considered to be that the drying properties of the ink are improved.

As described above, according to the ink of the present disclosure, it is considered that the improvement of graininess and the suppression of intercolor mixture are achieved by the combination of the surfactant (A), the surfactant (B), and the glycol ether (c-1).

Hereinafter, each component that can be contained in the ink according to the embodiment of the present disclosure will be described.

### <Water>

The ink of the present disclosure contains water (A).

The content of water is preferably 20% by mass or greater, more preferably 30% by mass or greater, and still more preferably 40% by mass or greater with respect to the total amount of the ink.

The upper limit of the content of water depends on the amount of other components. The upper limit of the content of water with respect to the total amount of the ink may be 90% by mass, 80% by mass, or the like.

### <Pigment>

The ink of the present disclosure contains at least one pigment.

In addition, the pigment may be an organic pigment or an inorganic pigment.

Examples of the organic pigment include an azo pigment, a polycyclic pigment, a chelate dye, a nitro pigment, a nitroso pigment, and aniline black. Among these, an azo pigment or a polycyclic pigment is preferable as the organic pigment.

Examples of the azo pigment include azo lake, an insoluble azo pigment, a condensed azo pigment, and a chelated azo pigment.

Examples of the polycyclic pigment include a phthalocyanine pigment, a perylene pigment, a perinone pigment, an anthraquinone pigment, a quinacridone pigment, a dioxazine pigment, an indigo pigment, a thioindigo pigment, an isoindolinone pigment, and a quinophthalone pigment.

Examples of the chelate dye include a basic dye-type chelate and an acid dye-type chelate.

Examples of the inorganic pigment include titanium oxide, iron oxide, calcium carbonate, barium sulfate, aluminum hydroxide, barium yellow, cadmium red, chrome yellow, and carbon black.

Examples of the pigment include pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.

The volume average particle diameter of the pigment is preferably in a range of 10 nm to 200 nm, more preferably in a range of 10 nm to 180 nm, and still more preferably in a range of 10 nm to 150 nm. In a case where the volume average particle diameter thereof is 200 nm or less, the color reproducibility is satisfactory, and the jettability is improved in a case where an image is recorded by an ink jet recording method. In a case where the volume average particle diameter is 10 nm or greater, the light fastness is satisfactory.

Further, the particle size distribution of the pigment is not particularly limited, and may be any of a wide particle size distribution or a monodispersed particle size distribution. In addition, two or more pigments having a monodispersed particle size distribution may be used in the form of a mixture.

The volume average particle diameter and the particle size distribution of the pigment are values measured by a particle size distribution measuring device (for example, MICROTRAC UPA (registered trademark) EX150, manufactured by Nikkiso Co., Ltd.).

The content of the pigment is preferably in a range of 1.0% by mass to 20.0% by mass and more preferably in a range of 1.0% by mass to 10.0% by mass with respect to the total amount of the ink.

### <Pigment dispersing agent>

The ink of the present disclosure may contain a pigment dispersing agent.

In the present disclosure, the pigment dispersing agent is a compound having a function of dispersing the pigment. The pigment dispersing agent is adsorbed on the surface of the pigment and applied to at least a part of the surface of the pigment, and thus the pigment can be dispersed in water.

It is preferable that the ink of the present disclosure, which contains a pigment dispersing agent, is prepared by using a pigment dispersion liquid containing a pigment and a pigment dispersing agent.

Further, in a case where a self-dispersing pigment that can be dispersed in water even in the absence of a pigment dispersing agent is used as the white pigment, the ink may not contain a pigment dispersing agent.

The form of the pigment dispersing agent is not particularly limited, and may be any of a random resin, a block resin, or a graft resin.

In addition, the pigment dispersing agent may be a resin having a crosslinking structure.

Among these, it is preferable that the pigment dispersing agent is a resin having a crosslinking structure. It is considered that in a case where the pigment dispersing agent is a resin having a crosslinking structure, the pigment dispersing agent is unlikely to be released from the surface of the pigment, and thus the dispersion stability of the pigment is high.

In the present disclosure, a resin denotes a compound having a weight-average molecular weight (Mw) of 1,000 or greater.

In the present disclosure, the weight-average molecular weight (Mw) denotes a value measured by gel permeation chromatography (GPC). The measurement according to gel permeation chromatography (GPC) is performed using HLC (registered trademark)-8020GPC (manufactured by Tosoh Corporation) as a measuring device, three columns of TSKgel (registered trademark) Super Multipore HZ-H (manufactured by Tosoh Corporation, 4.6 mmID × 15 cm), and tetrahydrofuran (THF) as an eluent. Further, the measurement is performed under measurement conditions of a sample concentration of 0.45% by mass, a flow rate of 0.35 ml/min, a sample injection volume of 10 µl, and a measurement temperature of 40°C using an RI detector. Further, the calibration curve is prepared using eight samples of "F-40", "F-20", "F-4", "F-1", "A-5000", "A-2500", "A-1000", and "n-propylbenzene" which are "Standard Samples TSK standard, polystyrene" (manufactured by Tosoh Corporation).

The resin having a crosslinking structure is not particularly limited as long as the resin has at least one crosslinking structure in a molecule.

Whether or not the resin contained in the ink has a crosslinking structure can be determined by, for example, the following method. First, the resin is separated from the ink by using a separation method such as solvent extraction. The presence or absence of the crosslinking structure can be comprehensively determined by analyzing the separated resin using various analysis methods such as a nuclear magnetic resonance method (NMR), an infrared spectroscopy method (IR), and a thermal analysis method.

The resin having a crosslinking structure (hereinafter, also referred to as "crosslinked resin") is formed, for example, by crosslinking an uncrosslinked resin (hereinafter, also referred to as "uncrosslinked resin") with a crosslinking agent. It is preferable that the uncrosslinked resin is a water-soluble resin.

In the present disclosure, the term "water-soluble" indicates a property in which 1 g or greater of a substance is dissolved in 100 g of water at 25°C. As the term "water-soluble" property, a property in which 3 g or greater (more preferably 10 g or greater) of a substance is dissolved in 100 g of water at 25°C is preferable.

Even in a case where the uncrosslinked resin is water-soluble, the crosslinked resin is not necessarily water-soluble.

Examples of the uncrosslinked resin include a vinyl resin, an acrylic resin, a urethane resin, and a polyester resin. Among these, an acrylic resin is preferable as the uncrosslinked resin.

It is preferable that the uncrosslinked resin is a resin containing a functional group capable of being crosslinked with a crosslinking agent. Examples of the crosslinkable functional group include a carboxy group or a salt thereof, an isocyanate group, and an epoxy group. Among these, from the viewpoint of improving the dispersibility of the pigment, a carboxy group or a salt thereof is preferable, and a carboxy group is particularly preferable as the crosslinkable functional group. That is, it is preferable that the uncrosslinked resin is a resin containing a carboxy group.

It is preferable that the uncrosslinked resin is a copolymer having a structural unit derived from a monomer containing a carboxy group (hereinafter, referred to as "carboxy group-containing monomer"). The structural unit derived from a carboxy group-containing monomer contained in a copolymer may be used alone or two or more kinds thereof. The copolymer may be a random copolymer or a block copolymer, but is preferably a random copolymer.

Examples of the carboxy group-containing monomer include (meth)acrylic acid, β-carboxyethyl acrylate, fumaric acid, itaconic acid, maleic acid, and crotonic acid.

From the viewpoints of the crosslinking properties and the dispersibility, (meth)acrylic acid or β-carboxyethyl acrylate is preferable, and (meth)acrylic acid is more preferable as the carboxy group-containing monomer.

The content of the structural unit derived from a carboxy group-containing monomer is preferably in a range of 5% by mass to 40% by mass, more preferably in a range of 10% by mass to 35% by mass, and still more preferably in a range of 10% by mass to 30% by mass with respect to the total amount of the uncrosslinked resin.

It is preferable that the uncrosslinked resin has a structural unit derived from a hydrophobic monomer in addition to the structural unit derived from a carboxy group-containing monomer. The structural unit derived from a hydrophobic monomer contained in the copolymer may be used alone or two or more kinds thereof.

Examples of the hydrophobic monomer include (meth)acrylate containing an alkyl group having 1 to 20 carbon atoms, (meth)acrylate having an aromatic ring (such as benzyl (meth)acrylate or phenoxyethyl (meth)acrylate), styrene, and a styrene derivative.

The content of the structural unit derived from a hydrophobic monomer is preferably in a range of 60% by mass to 95% by mass, more preferably in a range of 65% by mass to 90% by mass, and still more preferably in a range of 70% by mass to 90% by mass with respect to the total amount of the uncrosslinked resin.

The uncrosslinked resin is preferably a random copolymer having a structural unit derived from a carboxy group-containing monomer and at least one of a structural unit derived from a (meth)acrylate containing an alkyl group having 1 to 20 carbon atoms or a structural unit derived from a (meth)acrylate having an aromatic ring, more preferably a random copolymer having a structural unit derived from (meth)acrylic acid and a structural unit derived from a (meth)acrylate having an aromatic ring, and still more preferably a copolymer having a structural unit derived from (meth)acrylic acid and a structural unit derived from benzyl (meth)acrylate.

The weight-average molecular weight (Mw) of the uncrosslinked resin is not particularly limited, but is preferably in a range of 3,000 to 300,000, more preferably in a range of 5,000 to 200,000, and still more preferably in a range of 7,000 to 100,000 from the viewpoint of the dispersibility of a white pigment.

The preferable ranges of the weight-average molecular weight of the crosslinked resin are the same as the preferable ranges of the weight-average molecular weight of the uncrosslinked resin.

It is preferable that the crosslinking agent used in a case of crosslinking the uncrosslinked resin is a compound having two or more reaction sites with the uncrosslinked resin (for example, a resin containing a carboxy group). The crosslinking agent may be used alone or in combination of two or more kinds thereof.

As a combination of the crosslinking agent and the uncrosslinked resin, a combination of a compound containing two or more epoxy groups (that is, a bifunctional or higher functional epoxy compound) and a resin containing a carboxy group is preferable. In this combination, a crosslinking structure is formed by the reaction between the epoxy group and the carboxy group. It is preferable that the crosslinking structure is formed by the crosslinking agent after the pigment is dispersed by the uncrosslinked resin.

Examples of the bi- or higher functional epoxy compound include ethylene glycol diglycidyl ether, polyethylene glycol diglycidyl ether, 1,6-hexanediol diglycidyl ether, diethylene glycol diglycidyl ether, polyethylene glycol diglycidyl ether, dipropylene glycol diglycidyl ether, polypropylene glycol diglycidyl ether, and trimethylolpropane triglycidyl ether.

Among these, polyethylene glycol diglycidyl ether, diethylene glycol diglycidyl ether, or trimethylolpropane triglycidyl ether is preferable as the bi- or higher functional epoxy compound.

Commercially available products may be used as the crosslinking agent.

Examples of the commercially available products include Denacol EX-321, EX-821, EX-830, EX-850, and EX-851 (manufactured by Nagase ChemteX Corporation).

From the viewpoints of the crosslinking reaction rate and the dispersion stability after crosslinking, the molar ratio between a reaction site (for example, an epoxy group) in the crosslinking agent and a reaction site (for example, a carboxy group) in the uncrosslinked resin is preferably in a range of 1:1.1 to 1:10, more preferably in a range of 1:1.1 to 1:5, and still more preferably in a range of 1:1.1 to 1:3.

The mixing ratio between the pigment and the pigment dispersing agent is preferably in a range of 1:0.02 to 1:2, more preferably in a range of 1:0.03 to 1:1.5, and still more preferably in a range of 1:0.04 to 1:1 in terms of the mass.

### <Surfactant (A)>

The ink of the present disclosure contains a surfactant (A) which is an acetylene glycol-based nonionic surfactant.

The acetylene glycol-based nonionic surfactant as the surfactant (A) may be used alone or in combination of two or more kinds thereof.

A compound represented by Formula (A1) is preferable as the acetylene glycol-based nonionic surfactant as the surfactant (A).

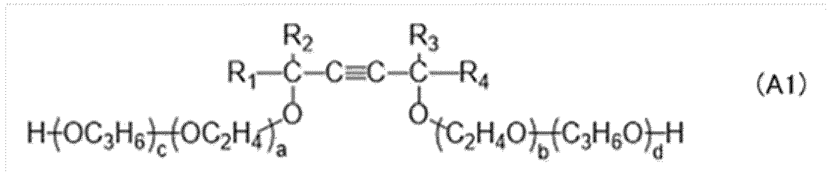

In Formula (A1), R₁ and R₄ each independently represent an alkyl group having 3 to 10 carbon atoms, and R₂ and R₃ each independently represent a methyl group or an ethyl group.
a, b, c, and d represent an average addition mole number of each unit and are respectively in a range of 0 to 50.

Suitable examples of the surfactant (A) include acetylene glycol selected from the group consisting of 2,4,7,9-tetramethyl-5-decyne-4,7-diol, 3,6-dimethyl-4-octyne-3,6-diol, 2,5,6,11-tetramethyl-6-dodecyne-5,8-diol, 2,5-dimethyl-3-hexyne-2,5-diol, and 2,5,8,11-tetramethyl-6-dodecyne-5,8-diol, and an ethylene oxide adduct of the acetylene glycol.

The surfactant (A) can be synthesized, for example, by reacting acetylene with a ketone or an aldehyde corresponding to the target acetylene glycol.

The surfactant (A) can be obtained, for example, by the method described in "Introduction of New Surfactants" (published by Sanyo Chemical Industries, Ltd., completely revised edition, 1992) written by Takehiko Fujimoto, pp. 94 to 107.

The HLB value of the surfactant (A) is preferably 3 or greater and 17 or less, more preferably 4 or greater and 14 or less, still more preferably 4 or greater and 12 or less, and even still more preferably 4 or greater and 10 or less.

In a case where the HLB value of the surfactant (A) is 3 or greater, intercolor mixture of the image is further suppressed.

In a case where the HLB value of the surfactant (A) is 17 or less, the graininess of the image is further improved.

A commercially available product may be used as the surfactant (A).

Examples of the commercially available product of the surfactant (A) include an acetylene-based surfactant (manufactured by Evonik Industries AG) and an acetylene-based surfactant (manufactured by Kawaken Fine Chemicals Co., Ltd.).

Examples of the acetylene-based surfactant (manufactured by Evonik Industries AG) include SURFYNOL 104E (HLB value: 4), SURFYNOL 104H (HLB value: 4), SURFYNOL 104A (HLB value: 4), SURFYNOL 104PA (HLB value: 4), SURFYNOL 104PG-50 (HLB value: 4), SURFYNOL 104S (HLB value: 4), SURFYNOL 420 (HLB value: 4), SURFYNOL 440 (HLB value: 8), SURFYNOL 465 (HLB value: 13), SURFYNOL 485 (HLB value: 17), SURFYNOL SE (HLB value: 6), SURFYNOL SE-F (HLB value: 6), SURFYNOL 61 (HLB value: 6), SURFYNOL 82 (HLB value: 4), SURFYNOL DF110D (HLB value: 3), DYNOL 604 (HLB value: 8), DYNOL 607 (HLB value: 8), SURFYNOL 2502 (HLB value: 8), SURFYNOL TG (HLB value: 9), OLFINE E1004 (HLB value: 7 to 9), and OLFINE E1010 (HLB value: 13 to 14).

Examples of the acetylene-based surfactant (manufactured by Kawaken Fine Chemicals Co., Ltd.) include ACETYLENOL E00, ACETYLENOL E13T, ACETYLENOL E40, ACETYLENOL E60, ACETYLENOL E100, and ACETYLENOL E200.

The content of the surfactant (A) is preferably 0.10% by mass or greater and 4.00% by mass or less, preferably 0.20% by mass or greater and 3.00% by mass or less, and more preferably 0.30% by mass or greater and 2.50% by mass or less with respect to the total amount of the ink.

In a case where the content of the surfactant (A) is 0.10% by mass or greater, the graininess of the image is further improved.

In a case where the content of the surfactant (A) is 4.00% by mass or less, intercolor mixture is further suppressed, foaming of the ink is further suppressed, and the jetting stability of the ink is further improved.

The value obtained by dividing the content of the surfactant (A) in units of % by mass with respect to the total amount of the ink by the HLB value of the surfactant (A) (hereinafter, also referred to as "content of (A)/HLB of (A)") is preferably 0.030 or greater and 0.500 or less and preferably 0.040 or greater and 0.400 or less.

In a case where "content of (A)/HLB of (A))" is 0.030 or greater, the graininess of the image is further improved.

In a case where "content of (A)/HLB of (A)" is 0.500 or less, intercolor mixture is further suppressed, foaming of the ink is further suppressed, and the jetting stability of the ink is further improved.

### <Surfactant (B)>

The ink of the present disclosure contains a surfactant (B) which is a compound represented by Formula (1).

The compound represented by Formula (1) serving as the surfactant (B) may be used alone or in combination of two or more kinds thereof.

The surfactant (B) (that is, a compound represented by Formula (1)) has a function as a nonionic surfactant.

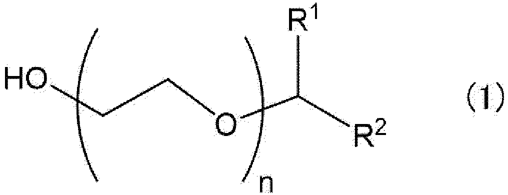

In Formula (1), R¹ and R² each independently represent a branched alkyl group having 3 to 20 carbon atoms, and n represents an integer of 1 to 20.

In Formula (1), the number of carbon atoms of the branched alkyl group having 3 to 20 carbon atoms represented by R¹ and R² is more preferably in a range of 4 to 12 and still more preferably in a range of 4 to 7.

In Formula (1), n represents preferably 2 to 16, more preferably 3 to 12, still more preferably 3 to 8, and even still more preferably 6.

n in Formula (1) is a value measured using MALDI-TOF MS.

It is preferable that the surfactant (B) is a compound represented by Formula (1-1).

The compound represented by Formula (1-1) is a compound in which R¹ in Formula (1) represents an isobutyl group and R² in Formula (1) represents a 2,4-dimethylpentyl group.

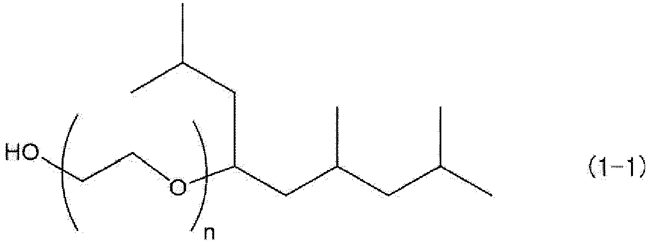

In Formula (1-1), n represents an integer of 1 to 20.

n in Formula (1-1) has the same definition as that for n in Formula (1), and the preferable ranges are the same as described above.

As the compound represented by Formula (1), a compound appropriately synthesized may be used, or a commercially available product may be used.

Examples of the commercially available product thereof include TRITON HW-1000 (manufactured by The Dow Chemical Company), TERGITOL TMN-3 (manufactured by The Dow Chemical Company), TERGITOL TMN-6 (manufactured by The Dow Chemical Company), TERGITOL TMN-100X (manufactured by The Dow Chemical Company), and TERGITOL TMN-10 (manufactured by The Dow Chemical Company).

The HLB value of the surfactant (B) is preferably 9 or greater and 16 or less and more preferably 8 or greater and 15 or less.

In a case where the HLB value of the surfactant (B) is 9 or greater, intercolor mixture of the image is further suppressed.

In a case where the HLB value of the surfactant (B) is 16 or less, the graininess of the image is further improved.

The content of the surfactant (B) is preferably 0.10% by mass or greater and 4.00% by mass or less, preferably 0.20% by mass or greater and 3.00% by mass or less, and more preferably 0.30% by mass or greater and 2.50% by mass or less with respect to the total amount of the ink.

In a case where the content of the surfactant (B) is 0.10% by mass or greater, the graininess of the image is further improved.

In a case where the content of the surfactant (B) is 4.00% by mass or less, intercolor mixture is further suppressed, foaming of the ink is further suppressed, and the jetting stability of the ink is further improved.

The value obtained by dividing the content of the surfactant (B) in units of % by mass with respect to the total amount of the ink by the HLB value of the surfactant (B) (hereinafter, also referred to as "content of (B)/HLB of (B)") is preferably 0.020 or greater and 0.350 or less, and preferably 0.022 or greater and 0.300 or less.

In a case where "content of (B)/HLB of (B)" is 0.020 or greater, the graininess of the image is further improved.

In a case where "content of (B)/HLB of (B)" is 0.350 or less, intercolor mixture is further suppressed, foaming of the ink is further suppressed, and the jetting stability of the ink is further improved.

### <Organic solvent (C)>

The ink according to the embodiment of the present disclosure contains an organic solvent (C).

Here, the organic solvent (C) denotes all the organic solvents contained in the ink of the present disclosure.

The content of the organic solvent (C) (that is, the total content of all the organic solvents) is preferably 10.0% by mass or greater and 40.0% by mass or less, more preferably 15.0% by mass or greater and 35.0% by mass or less, and still more preferably 20.0% by mass or greater and 30.0% by mass or less with respect to the total amount of the ink according to the present disclosure.

In a case where the content of the organic solvent (C) is 10.0% by mass or greater, the jettability of the ink is further improved.

In a case where the content of the organic solvent (C) is 40.0% by mass or less, intercolor mixture is further suppressed.

### (Glycol ether (c-1)))

The organic solvent (C) includes a glycol ether (c-1).

The glycol ether (c-1) is at least one selected from the group consisting of an alkylene glycol monoalkyl ether having a boiling point of 250°C or lower and a polyalkylene glycol monoalkyl ether having a boiling point of 250°C or lower.

In a case where the organic solvent (C) includes the glycol ether (c-1), the effect of suppressing intercolor mixture can be obtained.

Examples of the glycol ether (c-1) include ethylene glycol monoalkyl ether having a boiling point of 250°C or lower, diethylene glycol monoalkyl ether having a boiling point of 250°C or lower, triethylene glycol monoalkyl ether having a boiling point of 250°C or lower, propylene glycol monoalkyl ether having a boiling point of 250°C or lower, dipropylene glycol monoalkyl ether having a boiling point of 250°C or lower, and tripropylene glycol monoalkyl ether having a boiling point of 250°C or lower.

More specific examples of the glycol ether (c-1) include compounds (solvent species) used in examples described below.

Examples of the glycol ether (c-1) include, in addition to the compounds used in the examples described below, ethylene glycol methyl ether (bp: 124°C), ethylene glycol ethyl ether (bp: 135°C), ethylene glycol butyl ether (bp: 171°C), ethylene glycol 2-ethylhexyl ether (bp: 229°C), dipropylene glycol propyl ether (bp: 210°C), dipropylene glycol methyl ether (bp: 188°C), and tripropylene glycol butyl ether (bp: 243°C).

From the viewpoint of further suppressing intercolor mixture, it is preferable that the glycol ether (c-1) is at least one selected from the group consisting of ethylene glycol monoalkyl ether having a boiling point of 250°C or lower, diethylene glycol monoalkyl ether having a boiling point of 250°C or lower, propylene glycol monoalkyl ether having a boiling point of 250°C or lower, and dipropylene glycol monoalkyl ether having a boiling point of 250°C or lower.

From the viewpoint of further suppressing intercolor mixture, the content of the glycol ether (c-1) is preferably 1.0% by mass or greater and 35.0% by mass or less, more preferably 2.0% by mass or greater and 30.0% by mass or less, and still more preferably 2.5% by mass or greater and 28.0% by mass or less with respect to the total amount of the ink.

From the viewpoint of further suppressing intercolor mixture, the content mass ratio [(c-1)/(B)] which is the ratio of the content mass of the glycol ether (c-1) to the content mass of the surfactant (B) is preferably 0.5 or greater and 35.0 or less, more preferably 1.0 or greater and 32.0 or less, still more preferably 1.5 or greater and 30.0 or less, and even still more preferably 2.0 or greater and 28.0 or less.

### (Alkane diol (c-2))

From the viewpoint of the jettability of the ink, it is preferable that the organic solvent (C) includes at least one alkanediol (c-2) which is an alkanediol having 2 or more and 6 or less carbon atoms.

The alkanediol having 2 or more and 6 or less carbon atoms as the alkanediol (c-2) may be used alone or in combination of two or more kinds thereof.

Examples of the alkanediol (c-2) include ethylene glycol, propylene glycol, 1,2-butanediol, 1,2-pentanediol, and 1,2-hexanediol.

### (Other organic solvent species)

The organic solvent (C) may include other organic solvent species in addition to the glycol ether (c-1) and the alkanediol (c-2).

From the viewpoint of more effectively suppressing intercolor mixture, it is preferable that the ink of the present disclosure contains no high-boiling-point organic solvent having a boiling point of higher than 250°C or the content of a high-boiling-point organic solvent is 5.0% by mass or less (more preferably 3.0% by mass or less and still more preferably 1.0% by mass or less) with respect to the total amount of the ink in a case where the ink contains a high-boiling-point organic solvent.

### <Surfactant (D)>

It is preferable that the ink of the present disclosure contains a surfactant (D) which is a polyether-modified silicone surfactant.

The polyether-modified silicone surfactant as the surfactant (D) may be used alone or in combination of two or more kinds thereof.

A compound represented by Formula (D1) is preferable as the surfactant (D).

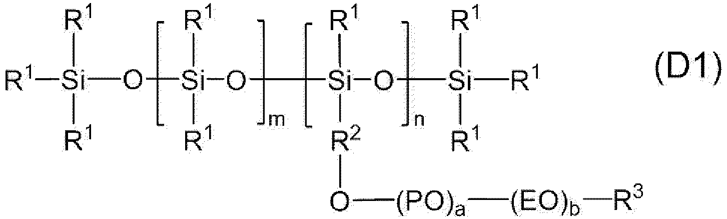

In Formula (D1), R¹'s each independently represent an alkyl group having 1 to 3 carbon atoms or a hydroxy group, R² represents an alkanediyl group having 2 to 5 carbon atoms, R³ represents a hydrogen atom, an alkyl group having 1 to 3 carbon atoms, or a hydroxy group, PO represents a propyleneoxy group, and EO represents an ethyleneoxy group. a, b, m, and n represent an average addition mole number of each unit, where a is in a range of 0 to 10, b is in a range of 1 to 50, m is in a range of 1 to 500, and n is in a range of 1 to 50.

Further, in Formula (D1), the alignment of PO and EO may be an alignment of block copolymers or an alignment of random copolymers.

In Formula (D1), an alignment of a structural unit with a subscript m and a structural unit with a subscript n may be an alignment of block copolymers or an alignment of random copolymers.

R¹ represents preferably an alkyl group having 1 to 3 carbon atoms and more preferably a methyl group.

R² represents preferably an alkanediyl group having 3 or 4 carbon atoms and more preferably a trimethylene group.

R³ represents preferably an alkyl group having 1 to 3 carbon atoms and more preferably a methyl group.

It is more preferable that a is 0, b is in a range of 1 to 15, m is in a range of 1 to 10, and n is in a range of 1 to 5. Further, it is still more preferable that a is 0, b is in a range of 3 to 10, m is in a range of 1 to 3, and n is in a range of 1 to 3.

A commercially available product may be used as the surfactant (D).

Examples of the commercially available product of the surfactant (D) include BYK-302, BYK-307, BYK-331, BYK-333, BYK-345, BYK-347, BYK-348, BYK-349, BYK-378, BYK-3400, BYK-3450, BYK-3451, BYK-3455, and BYK-3760 (all manufactured by BYK-Chemie GmbH), KF-351A, KF-352A, KF-353, KF-354L, KF-355A, KF-615A, KF-945, KF-640, KF-642, KF-643, KF-644, KF-6011, KF-6012, KF-6015, KF-6017, and KF-6020 (all manufactured by Shin-Etsu Chemical Co., Ltd.), SILFACE SAG002, SILFACE SAG005, SILFACE SAG008, and SILFACE SAG503A (all manufactured by Nissin Chemical Industry Co., Ltd.), and TEGOWet KL245, TEGOWet 240, TEGOWet 250, TEGOWet 260, TEGOWet 270, and TEGOWet 280 (all manufactured by Evonik Industries AG).

All of these commercially available products are compounds represented by Formula (D1).

The content of the surfactant (D) is preferably 0.01% by mass or greater and 3.00% by mass or less, more preferably 0.02% by mass or greater and 2.00% by mass or less, and still more preferably 0.05% by mass or greater and 1.50% by mass or less with respect to the total amount of the ink.

In a case where the content of the surfactant (D) is 0.01% by mass or greater, intercolor mixture is further suppressed.

In a case where the content of the surfactant (D) is 3.00% by mass or less, intercolor mixture is further suppressed, foaming of the ink is further suppressed, and the jetting stability of the ink is further improved.

It is preferable that the ink of the present disclosure contains at least one kind of resin particles.

In this manner, the rub resistance of the image is further improved.

The resin particles contain a resin and may contain a core material or the like other than the resin, but it is preferable that the resin particles consist of only the resin.

As the resin particles, particles consisting of an acrylic resin, particles consisting of a polyester resin, particles consisting of a polyurethane resin, or particles consisting of a polyolefin resin are preferable, and particles consisting of an acrylic resin are more preferable.

The resin particles may refer to, for example, paragraphs 0038 to 0114 of WO2021/192720A and paragraphs 0109 to 0120 of JP2015-25076A.

From the viewpoint of further improving the rub resistance of the image, the glass transition temperature (Tg) of the resin particles is preferably in a range of 90°C to 250°C and more preferably in a range of 100°C to 230°C.

Here, a measurement Tg obtained by actual measurement is employed as the glass transition temperature (Tg) of the resin particles. A method of measuring the measurement Tg can refer to paragraph 0111 of JP2015-25076A.

In a case where the ink of the present disclosure contains resin particles, the content of the resin particles is preferably greater than 0% by mass and 10.0% by mass or less, more preferably 0.1% by mass or greater and 8.0% by mass or less, and still more preferably 0.5% by mass or greater and 7.0% by mass or less with respect to the total amount of the ink.

The ink of the present disclosure, which contains resin particles, may be prepared by using a commercially available resin emulsion (that is, an aqueous dispersion liquid of resin particles).

Examples of the commercially available resin emulsion include A-810 (Sansui Co., Ltd.), A-995 (Sansui Co., Ltd.), HIROS X·NE-2186 (SEIKO PMC CORPORATION), HIROS X·TE-1048 (SEIKO PMC CORPORATION), SAIVINOL SK-202 (Saiden Chemical Industry Co., Ltd.), TOCRYL W-1048 (TOYOCHEM CO., LTD.), WC-M-1217 (Arakawa Chemical industries, Ltd.), WC-M-1219 (Arakawa Chemical industries, Ltd.), N985 (A)-1 (Emulsion Technology Co., Ltd.), Neocryl A-1105 (DSM Coating Resins Ltd.), ACRIT SE-810A, ACRIT SE-953A-2, ACRIT SE-1658F, ACRIT SE-2974F, ACRIT SE-2978F (Taisei Fine Chemical Co., Ltd.), LACSTAR 7132-C (DIC Corporation), ST200 (Nippon Shokubai Co., Ltd.), and MOVINYL 972 (Japan Coating Resin Co., Ltd.).

### <Other components>

As necessary, the ink of the present disclosure may contain other components in addition to the components described above.

Examples of the other components include colloidal silica, waxes, inorganic salts, solid wetting agents (urea and the like), fading inhibitors, emulsion stabilizers, penetration enhancers, ultraviolet absorbing agents, preservatives, fungicides, pH adjusters, antifoaming agents, viscosity adjusters, dispersion stabilizers, rust inhibitors, chelating agents, and water-soluble polymer compounds.

### <Physical properties of ink>

### (Viscosity)

The viscosity of the ink according to the present disclosure is preferably in a range of 1.2 mPa·s to 15.0 mPa s, more preferably in a range of 2.0 mPa's to 13.0 mPa·s, and still more preferably in a range of 2.5 mPa·s to 10.0 mPa·s.

The viscosity of the ink is measured at a temperature of 30°C using a rotational viscometer, for example, "VISCOMETER TV-22" (product name, manufactured by Toki Sangyo Co., Ltd.).

### (pH)

From the viewpoint of the storage stability of the ink, the pH of the ink according to the present disclosure is preferably in a range of 6.0 to 11.0, more preferably in a range of 7.0 to 10.0, and still more preferably in a range of 7.0 to 9.5.

The pH of the ink is measured at a temperature of 25°C using a pH meter, for example, "WM-50EG" (product name, manufactured by DKK-TOA Corporation).

### [Ink set]

An ink set of the present disclosure is an ink set including two or more kinds of inks, in which at least one of the two or more kinds of inks is the ink of the present disclosure described above.

The ink set of the present disclosure includes the ink of the present disclosure described above.

Therefore, according to the ink set of the present disclosure, the same effects as the effects of the ink according to the present disclosure described above (that is, improvement of the graininess and suppression of intercolor mixture) are exhibited.

As the two or more kinds of inks, two or more kinds of inks having different hues are preferable, two or more kinds of inks selected from the group consisting of a yellow ink, a magenta ink, a cyan ink, a black ink, and a white ink are more preferable, and two or more kinds of inks selected from the group consisting of a yellow ink, a magenta ink, a cyan ink, and a black ink are still more preferable.

In a case where the ink of the first color to be applied to a recording medium is defined as a first ink and the ink of the second color to be applied to the recording medium is defined as a second ink among the two or more kinds of inks, at least one of the first ink or the second ink is preferably the ink of the present disclosure, at least the first ink is more preferably the ink of the present disclosure, and both the first ink and the second ink are still more preferably the ink of the present disclosure.

The two or more kinds of inks may include other inks in addition to the first ink and the second ink (for example, a third ink which is an ink of the third color to be applied to the recording medium, a fourth ink which is an ink of the fourth color to be applied to the recording medium, and the like).

### [Ink Jet Recording Method]

The ink jet recording method of the present disclosure includes a step of applying the ink of the present disclosure described above onto a recording medium by an ink jet method (hereinafter, also referred to as an applying step).

The ink jet recording method of the present disclosure may include other steps as necessary.

In the inkjet recording method of the present disclosure, the above-described ink of the present disclosure is used.

Therefore, according to the ink jet recording method of the present disclosure, the same effects as the effects of the ink according to the present disclosure described above (that is, improvement of graininess and suppression of intercolor mixture) are exhibited.

### <Applying step>

The applying step is a step of applying the ink of the present disclosure onto the recording medium by an ink jet method.

### (Recording medium)

The recording medium is not particularly limited, and examples thereof include so-called coated paper used for general offset printing and the like. The coated paper is provided with a coating layer obtained by applying a coating material to a surface of high-quality paper, alkaline paper, or the like, which is mainly formed of cellulose and is not generally surface-treated.

The coated paper may be generally available on the market. As the coated paper, for example, coated paper for general printing can be used, and specific examples thereof include coated paper (A2, B2) such as "OK TOPCOAT+" (manufactured by OJI PAPER CO., LTD.), and "AURORA COAT" and "ULITE" (manufactured by NIPPON PAPER INDUSTRIES CO., LTD.), and art paper (A1) such as "TOKUBISHI ART" (manufactured by MITSUBISHI PAPER MILLS LIMITED).

The recording medium may be a low water absorption recording medium or a non-water absorption recording medium.

In the present disclosure, the low water absorption recording medium refers to a recording medium having a water absorption coefficient Ka of 0.05 mL/m²·ms^{1/2} to 0.5 mL/m²·ms^{1/2}, preferably 0.1 mL/m²·ms^{1/2} to 0.4 mL/m²·ms^{1/2} and more preferably 0.2 mL/m²·ms^{1/2} to 0.3 mL/m²·ms^{1/2}.

In addition, the non-water absorption recording medium refers to a recording medium having a water absorption coefficient Ka of less than 0.05 mL/m²·ms^{1/2}.

The water absorption coefficient Ka is synonymous with one described in JAPAN TAPPI Pulp and Paper Test Method No. 51:2000 (published by Pulp and Paper Technology Association). Specifically, the absorption coefficient Ka is calculated from the difference in amount of water transfer between the contact time of 100 ms and the contact time of 900 ms, using an automatic scanning absorptometer KM500Win (manufactured by KUMAGAI RIKI KOGYO Co., Ltd.).

A resin base material is preferable as the non-water absorption recording medium. Examples of the resin base material include a base material obtained by molding a thermoplastic resin in a sheet shape.

It is preferable that the resin base material contains polypropylene, polyethylene terephthalate, nylon, polyethylene, or polyimide.

The resin base material may be a transparent resin base material or a colored resin base material, or at least a part thereof may be subjected to a metal vapor deposition treatment or the like.

The shape of the resin base material is not particularly limited, but a sheet-like resin base material is preferable. From the viewpoint of the productivity of the printed material, a sheet-like resin base material which is capable of forming a roll by being wound is more preferable.

### (Application of ink by ink jet method)

A known method can be employed as the inkjet method.

Examples of the inkjet method include an electric charge control method of jetting an ink by using an electrostatic attraction force, a drop-on-demand method (pressure pulse method) of using a vibration pressure of a piezoelectric element, an acoustic ink jet method of converting an electric signal into an acoustic beam, irradiating an ink with the acoustic beam, and jetting the ink using a radiation pressure, and a thermal ink jet (Bubble jet (registered trademark)) method of heating an ink to form air bubbles and utilizing the generated pressure.

Examples of the ink jet head used in the ink jet method include a shuttle method using a short serial head, in which recording is performed while the head scans a recording medium in the width direction; and a line method using a line head, in which recording elements are arranged in correspondence with the entire area of one side of a recording medium.

In the line method, a pattern can be formed on the entire surface of the recording medium by scanning the recording medium in the direction intersecting the arrangement direction of the recording elements, and thus a transport system such as a carriage which scans the short head is unnecessary. Further, in the line method, since complicated scanning control between the movement of the carriage and the recording medium is unnecessary, and only the recording medium moves, the recording speed can be increased as compared with the shuttle method.

The liquid droplet volume of the ink to be jetted from the inkjet head is preferably in a range of 1 pL (picoliter) to 100 pL, more preferably in a range of 1.5 pL to 80 pL, and still more preferably in a range of 1.8 pL to 50 pL.

The applying step may include heating and drying the ink applied onto the recording medium.

Examples of a heating and drying unit include a known heating unit such as a heater, a known blowing unit such as a dryer, and a unit obtained by combining these units.

Specific examples of a method of heating a recording medium include a method of applying heat from a side opposite to a surface of the recording medium to which the ink has been applied by a heater or the like, a method of applying warm air or hot air to the surface of the recording medium to which the ink has been applied, a method of applying heat from a side of the surface of the recording medium to which the ink has been applied or from a side opposite to the surface by an infrared heater, and a method of combining a plurality of these methods.

The heating temperature is preferably 55°C or higher, more preferably 60°C or higher, and particularly preferably 65°C or higher. The upper limit of the heating temperature is not particularly limited, and is, for example, 150°C.

The heating time is not particularly limited, but it is preferably in a range of 3 seconds to 60 seconds, more preferably in a range of 5 seconds to 60 seconds, and particularly preferably 10 seconds to 40 seconds.

### <Preferable aspect>

According to a preferable aspect of the present disclosure, the ink jet recording method uses the ink set of the present disclosure described above, and includes a step of applying each of two or more kinds of inks including at least one ink of the present disclosure onto the recording medium using the ink jet method.

According to the preferable aspect, an ink set including the ink of the present disclosure is used in the inkjet recording method.

Therefore, according to the ink jet recording method of the preferable aspect, the same effects as the effects of the ink according to the present disclosure described above (that is, improvement of graininess and suppression of intercolor mixture) are exhibited.

In particular, a multicolor image (for example, a secondary color image formed of two kinds of inks) having excellent graininess and suppressed intercolor mixture can be obtained by using two or more kinds of inks.

For example, in a case of using the ink set of the aspect in which the ink set includes the first ink and the second ink and at least one of the first ink or the second ink is the ink of the present disclosure, it is preferable that the first ink is applied onto the recording medium and that the second ink is applied onto a region including an overlapping portion with the first ink on the recording medium. In this manner, the effect of suppressing intercolor mixture is more effectively achieved.

### <Ink jet recording device>

An ink jet recording method of the present disclosure can be performed using a known ink jet recording device (that is, an image recording device to which an ink jet method is applied).

Examples of the known ink jet recording device include known image recording devices described in JP2010-83021A, JP2009-234221A, and JP1998-175315A (JP-H10-175315A).

In the case of using the ink set of the aspect in which the ink set includes the first ink and the second ink and at least one of the first ink or the second ink is the ink of the present disclosure, the following inkjet recording device (hereinafter, also referred to as a recording device A) is suitable.

The recording device A includes a transport mechanism that transports a recording medium, a first ink jet head that jets a first ink, and a second ink jet head that is disposed on a downstream side of the first ink jet head in a transport direction of the recording medium and jets a second ink.

According to the recording device A, the recording medium is transported by the transport mechanism, the first ink is jetted from the first ink jet head onto the transported recording medium, and the second ink can be jetted from the second ink jet head onto a region including an overlapping portion with the first ink on the recording medium.

In this manner, a secondary color image including an image derived from the first ink and an image derived from the second ink is obtained.

The recording medium A may include other elements such as a third ink jet head for jetting a third ink and a fourth ink j et head for jetting a fourth ink, as necessary.

### Examples

Hereinafter, the present disclosure will be described in more detail based on examples, but the present disclosure is not limited to the following examples unless the gist thereof is overstepped.

In the preparation of each ink, each pigment dispersion liquid and an aqueous dispersion liquid of resin particles A were prepared in advance, and each ink was prepared using these dispersion liquids.

### <Synthesis of pigment dispersing agent>

A monomer feed composition was prepared by mixing methacrylic acid (172 parts by mass), benzyl methacrylate (828 parts by mass), and isopropanol (375 parts by mass). Further, an initiator feed composition was prepared by mixing 2,2-azobis(2-methylbutyronitrile) (22.05 parts by mass) and isopropanol (187.5 parts by mass). Next, isopropanol (187.5 parts by mass) was heated to 80°C in a nitrogen atmosphere, and a mixture of the monomer feed composition and the initiator feed composition was added dropwise thereto over 2 hours. After completion of the dropwise addition, the obtained solution was further maintained at 80°C for 4 hours and then cooled to 25°C. After cooling of the solution, the solvent was removed under reduced pressure, thereby obtaining a water-soluble polymer (methacrylic acid/benzyl methacrylate copolymer). The water-soluble polymer had a weight-average molecular weight of about 30,000 and an acid value of 112 mgKOH/g.

### <Preparation of cyan pigment dispersion liquid>

0.8 equivalents of the amount of methacrylic acid in the obtained water-soluble polymer (150 parts by mass) were neutralized with a potassium hydroxide aqueous solution. Thereafter, ion exchange water was added thereto to adjust the concentration to 25% by mass, thereby obtaining an aqueous solution of a polymer dispersing agent Q-1.

The aqueous solution (124 parts by mass) of the polymer dispersing agent Q-1, a cyan pigment (Pigment Blue 15:3 (phthalocyanine blue-A220, manufactured by Dainichiseika Color & Chemicals Mfg. Co., Ltd.) (48 parts by mass), water (75 parts by mass), and dipropylene glycol (30 parts by mass) were mixed and dispersed using a beads mill (bead diameter of 0.1 mmcp, zirconia beads) until a desired volume average particle diameter was obtained, thereby obtaining a dispersion liquid (uncrosslinked dispersion liquid) in which the cyan pigment was dispersed by the polymer dispersing agent Q-1. The pigment concentration of the cyan pigment was 15% by mass.

Trimethylolpropane polyglycidyl ether (product name, "Denacol EX-321", manufactured by Nagase ChemteX Corporation) (1.3 parts by mass) as a crosslinking agent and a boric acid aqueous solution (boric acid concentration: 4% by mass) (14.3 parts by mass) were added to this uncrosslinked dispersion liquid (136 parts by mass), and the solution was allowed to react at 50°C for 6 and a half hours and cooled to 25°C, whereby the polymer dispersing agent Q-1 was crosslinked by the crosslinking agent. In this manner, a dispersion liquid (crosslinked dispersion liquid) in which the cyan pigment was dispersed by a crosslinked resin 1 was obtained. Further, the crosslinked resin 1 is a crosslinked substance of the resin dispersing agent Q-1. Next, ion exchange water was added to the obtained crosslinked dispersion liquid, and ultrafiltration was performed using a stirring type ULTRAHOLDER (manufactured by Advantec AS) and an ultrafiltration filter (manufactured by Advantec AS, fractional molecular weight of 50,000, Q0500076E ULTRAFILTER). A cyan pigment dispersion liquid (cyan pigment concentration of 15% by mass) in which the cyan pigment was dispersed by the crosslinked resin 1 was obtained by performing purification such that the concentration of dipropylene glycol in the crosslinked dispersion liquid was set to 0.1% by mass or less and performing concentration until the pigment concentration reached 15% by mass.

### <Preparation of magenta pigment dispersion liquid>

A cyan pigment dispersion liquid was obtained by the same method as in the preparation of the magenta pigment dispersion liquid except that Pigment Red 122 (CHROMOFINE RED, manufactured by Dainichiseika Color & Chemicals Mfg. Co., Ltd.), which is a magenta pigment, was used in place of the cyan pigment.

### <Preparation of aqueous dispersion liquid of resin particles A>

A three-neck flask equipped with a stirrer, a thermometer, a reflux condenser, and a nitrogen gas introduction pipe was charged with water (250 g), 12-methacrylamidododecanoic acid (6.7 g), potassium hydrogen carbonate (0.17 g), and isopropanol (20 g) and was heated to 85°C under a nitrogen stream. Here, a mixed solution consisting of 4,4'-azobis(4-cyanovaleric acid) (radical polymerization initiator, product name, "V-501", manufactured by FUJIFILM Wako Pure Chemical Corporation) (0.11 g), potassium hydrogen carbonate (0.08 g), and water (9 g) was added thereto, and the mixture was stirred for 10 minutes. Next, a monomer solution consisting of styrene (14 g), benzyl methacrylate (14 g), methyl methacrylate (48 g), butyl methacrylate (3.3 g), and hydroxyethyl methacrylate (14 g) was added dropwise to the three-neck flask at a constant speed until the dropwise addition was completed in 3 hours. Further, a mixed solution consisting of V-501 (0.06 g), potassium hydrogen carbonate (0.04 g), and water (6 g) was added to the solution twice, immediately after the start of dropwise addition of the monomer solution and 1.5 hours after the start of dropwise addition of the monomer solution. After completion of the dropwise addition of the monomer solution, the mixed solution was stirred for 1 hour. Subsequently, a mixed solution consisting of V-501 (0.06 g), potassium hydrogen carbonate (0.04 g), and water (6 g) was added to the obtained reaction mixture, and the mixture was further stirred for 3 hours. The obtained reaction mixture was filtered through a mesh having a mesh size of 50 µm, thereby obtaining an aqueous dispersion liquid of resin particles A. The resin particles A are an example of acrylic resin particles.

### <Preparation of cyan inks (Inks C1 to C66)>

Each component listed in Tables 1 to 7 was mixed, and coarse particles were removed from the obtained mixed solution using a 1 µm filter to prepare of inks C1 to C66 having the compositions listed in Tables 1 to 7 as cyan inks.

### - Description of compositions listed in Tables 1 to 7 -

The number in the column of each component denotes the content (% by mass) of the component (the solid content in a case of a dispersion liquid) with respect to the total amount of the ink. The blank denotes that the ink does not contain the corresponding component.

The HLB values are listed together in the columns of the surfactants (A) and (B), and the boiling points (bp) are listed together in the columns of the organic solvents.

The cyan pigment dispersion liquid and the aqueous dispersion liquid of the resin particles A respectively denote the cyan dispersion liquid and the aqueous dispersion liquid of the resin particles A prepared above.

### - Abbreviations in Tables 1 to 7 -

The abbreviations in Tables 1 to 7 have the following meanings.

### (Surfactant (A))

S440: SURFYNOL 440 (manufactured by Evonik Industries AG)
SE: SURFYNOL SE (manufactured by Evonik Industries AG)
SE-F: SURFYNOL SE-F (manufactured by Evonik Industries AG)
D604: DYNOL 604 (manufactured by Evonik Industries AG)
D607: DYNOL 607 (manufactured by Evonik Industries AG)
S2502: SURFYNOL 2502 (manufactured by Evonik Industries AG)
PD-002W: OLFINE PD-002W (manufactured by Evonik Industries AG)
S104: SURFYNOL 104 (manufactured by Evonik Industries AG)
S465: SURFYNOL 465 (manufactured by Evonik Industries AG)
S485: SURFYNOL 485 (manufactured by Evonik Industries AG)
E1010: OLFINE E1010 (manufactured by Evonik Industries AG)

### (Surfactant (B))

TMN-3: TERGITOL TMN-3 (manufactured by The Dow Chemical Company), compound in which n in Formula (1-1) represents 3 (average)
TMN-6: TERGITOL TMN-6 (manufactured by The Dow Chemical Company), aqueous dispersion liquid of compound with solid content of 90% by mass, in which n in Formula (1-1) represents 8 (average)
TMN-100X: TERGITOL TMN-100X ((manufactured by The Dow Chemical Company), aqueous dispersion liquid of compound with solid content of 90% by mass, in which n in Formula (1-1) represents 9 (average)
TMN-10: TERGITOL TMN-10 (manufactured by The Dow Chemical Company), aqueous dispersion liquid of compound with solid content of 90% by mass, in which n in Formula (1-1) represents 11 (average)
HW-1000: TRITON HW-1000 (manufactured by The Dow Chemical Company), aqueous dispersion liquid of compound with solid content of 90% by mass, in which n in Formula (1-1) represents 6 (average)
(Glycol ether (c-1)))
EGiPE: ethylene glycol isopropyl ether
EGPE: ethylene glycol propyl ether
EGtBE: ethylene glycol t-butyl ether
EGHE: ethylene glycol hexyl ether
DEGME: diethylene glycol methyl ether
DEGEE: diethylene glycol ethyl ether
DEGiPE: diethylene glycol isopropyl ether
DEGBE: diethylene glycol butyl ether
DEGiBE: diethylene glycol isobutyl ether
PGME: propylene glycol methyl ether
PGEE: propylene glycol ethyl ether
PGPE: propylene glycol propyl ether
PGBE: propylene glycol butyl ether
DPGME: dipropylene glycol methyl ether
TEGME: triethylene glycol methyl ether
(Alkane diol (c-2))
· PG: propylene glycol
· 1,2-BD: 1,2-butanediol
· 1,2-HD: 1,2-hexanediol

### (Other organic solvents)

DEGHE: diethylene glycol hexyl ether
DEGDEE: diethylene glycol diethyl ether
EGMEA: ethylene glycol monomethyl ether acetate
GL: glycerin

### (Surfactant (D))

BYK-345: BYK-345 (manufactured by BYK-Chemie GmbH), compound represented by Formula (D1)
BYK-347: BYK-347 (manufactured by BYK-Chemie GmbH), compound represented by Formula (D1)
BYK-333: BYK-333 (manufactured by BYK-Chemie GmbH), compound represented by Formula (D1)
KF-351A: KF-351A (manufactured by Shin-Etsu Chemical Co., Ltd.), compound represented by Formula (D1)
KF-6011: KF-6011 (manufactured by Shin-Etsu Chemical Co., Ltd.), compound represented by Formula (D1)

### (Other surfactants)

EMULGEN 106: EMULGEN 106 (manufactured by Kao Corporation), polyoxyethylene lauryl ether

### (Other components)

HITEC E-6314: HITEC E-6314 (manufactured by Toho Chemical Industry Co., Ltd.), polyethylene wax, aqueous dispersion liquid having concentration of solid contents of 35% by mass
Urea: Urea (manufactured by Nissan Chemical Corporation)
PVP K-15: PVP K-15 (manufactured by Ashland Inc.), polyvinylpyrrolidone
SNOWTEX XS: colloidal silica (manufactured by Nissan Chemical Corporation)

### <Preparation of magenta inks (inks M1 to M66)>

Inks M1 to M66 were respectively prepared as magenta inks by performing the same operation as in the preparation of the inks C1 to C66 except that the cyan pigment dispersion liquid was changed to the same mass of the magenta pigment dispersion liquid in the preparation of each of the inks C1 to C66.

### [Examples 1 to 61 and Comparative Examples 1 to 7]

The graininess and the intercolor mixture were evaluated by performing image recording using the combinations of the cyan inks and the magenta inks listed in Tables 1 to 7.

Hereinafter, the details will be described.

### <Evaluation of graininess>

### (Image recording 1)

An image recording device including a transport mechanism for transporting a recording medium, a first ink jet head fixedly disposed, and a second ink jet head fixedly disposed on a downstream side of the first inkjet head was prepared.

The first ink jet head was used to jet the cyan ink as the first ink, and the second ink jet head was used to jet the magenta ink as the second ink.

A recording medium (product name "OK TOP COAT", manufactured by Oji Paper Co., Ltd.) was fixed on a stage in an environment of a temperature of 25°C ± 1°C and a relative humidity of 30% ± 5%, and the cyan ink (that is, the first ink) and an ink jet head (product name "GELJET GX5000 Printer Head", manufactured by Ricoh Co., Ltd.) was filled with the magenta ink (that is, the second ink) listed in Tables 1 to 7.

Both the first ink jet head and the second ink jet head were disposed such that the alignment direction of nozzles was inclined by 75.7° with respect to a direction orthogonal to the transport direction of the recording medium.

The interval between the first ink jet head and the second ink jet head was set to 122 mm. The transportation speed of the recording medium was set to 73.2 m/min (jetting interval between the first ink and the second ink: 100 milliseconds).

A cyan image with a duty of 40% was recorded by jetting the cyan ink as the first ink from the first ink jet head onto the recording medium during transportation, and a magenta image with a duty of 40% was recorded by jetting the magenta ink as the second ink from the second inkjet head such that the magenta image was superimposed on the cyan image.

As described above, an image recorded material 1 including a secondary color image consisting of the cyan image and the magenta image was superimposed on the cyan image was obtained.

### (Evaluation of graininess)

The presence or absence of granularity of the secondary color image in the image recorded material for evaluating the graininess was visually observed, and the graininess was evaluated according to the following evaluation standards.

The results thereof are listed in Tables 1 to 7.

In the following evaluation standards, the rank of the most excellent graininess (that is, the rank of the most suppressed granularity) is A.

### - Evaluation standards for graininess -

A: Granularity was not recognized (the image was uniform without density unevenness, and ink omission was not observed).
B: Granularity was slightly recognized (some sites showed different shades, but ink omission was not observed).
C: Granularity was recognized (sites with ink omission were found, and slight voids occurred).
D: Granularity was significant (an excessive number of sites with ink omission were found in the image, and voids were conspicuous).

### <Evaluation of intercolor mixture>

### (Image recording 2)

The image recording device was set in the same manner as in the image recording 1.

A cyan ink as the first ink was jetted from the first ink jet head onto a recording medium during transportation to record a line image with a duty of 100% and a width of 500 µm, and a magenta ink as the second ink was jetted from the second ink jet head onto a region across the line image and the periphery thereof to record a solid image with a duty of 100%. The recording medium was placed on a hot plate at 70°C in a state of the image recorded surface facing upward immediately after the solid image was recorded, and the recording medium was immediately dried with warm air at 120°C for 10 seconds using a dryer, thereby preparing an image recorded material 2.

The image recorded material 2 includes a secondary color image consisting of a cyan line image and a magenta solid image across the line image and the periphery thereof.

### (Image recording 3)

The image recording device was set in the same manner as in the image recording 1.

A cyan ink as the first ink was jetted from the first ink jet head onto the recording medium during transportation to record a solid image with a duty of 100%, and a magenta ink as the second ink was jetted from the second ink jet head onto the solid image in a line shape to record a line image with a duty of 100% and a width of 500 µm. The recording medium was placed on a hot plate at 70°C in a state of the image recorded surface facing upward immediately after the line image was recorded, and the recording medium was immediately dried with warm air at 120°C for 10 seconds using a dryer, thereby preparing an image recorded material 3.

The image recorded material 3 includes a secondary color image consisting of a cyan solid image and a magenta line image recorded on the solid image.

### (Evaluation of intercolor mixture)

In the image recorded material 2, a line-shaped overlapping portion between the cyan image and the magenta image was observed with an optical microscope, the width of the overlapping portion was measured at 10 sites, and the average value thereof was calculated.

In the image recorded material 3, a line-shaped overlapping portion between the cyan image and the magenta image was observed with an optical microscope, the width of the overlapping portion was measured at 10 sites, and the average value thereof was calculated.

The average value of the average value of the widths of the overlapping portion of the image recorded material 2 and the average value of the widths of the overlapping portion of the image recorded material 3 (hereinafter, referred to as "average width") was calculated, and the intercolor mixture was evaluated according to the following evaluation standards.

The results thereof are listed in Tables 1 to 7.

In the following evaluation standards, the rank of the most suppressed intercolor mixture is A.

### - Evaluation standards for intercolor mixture -

A: The average width was less than 700 µm.
B: The average width was 700 µm or greater and less than 900 µm.
C: The average width was 900 µm or greater and less than 1,100 µm.
D: The average width was 1,100 µm or greater.

**[Table 1]**

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Cyan ink No. | | C1 | C2 | C3 | C4 | C5 | C6 | C7 | C8 | C9 | C10 |
| Cyan pigment dispersion liquid | | 3.0 | 3.0 | 3.0 | 3.0 | 3.0 | 3.0 | 3.0 | 3.0 | 3.0 | 3.0 |
| | S440 with HLB value of 8 | 1.25 | | | | | | | | | |
| | SE with HLB value of 6 | | 1.25 | | | | | | | | |
| | SE-F with HLB value of 6 | | | 1.25 | | | | | | | |
| | D604 with HLB value of 8 | | | | 1.25 | | | | 1.25 | 1.25 | 1.25 |
| | D607 with HLB value of 8 | | | | | 1.25 | | | | | |
| | S2502 with HLB value of 8 | | | | | | 1.25 | | | | |
| Surfactant (A) | PD-002W with HLB value of 9.5 | | | | | | | 1.25 | | | |
| | S104 with HLB value of 4 | | | | | | | | | | |
| | S465 with HLB value of 13 | | | | | | | | | | |
| | S485 with HLB value of 17 | | | | | | | | | | |
| | E1010 with HLB value of 13.5 | | | | | | | | | | |
| Surfactant (B) | TMN-3 with HLB value of 8.1 | | | | | | | | 1.00 | | |
| | TMN-6 with HLB value of 13.1 | 1.00 | 1.00 | 1.00 | 1.00 | 1.00 | 1.00 | 1.00 | | | |
| | TMN-100X with HLB value of 14.0 | | | | | | | | | 1.00 | |
| | TMN-10 with HLB value of 14.4 | | | | | | | | | | 1.00 |
| | HW-1000 with HLB value of 10.8 | | | | | | | | | | |
| | EGiPE (bp 141°C) | | | | | | | | | | |
| | EGPE (bp 151°C) | | | | | | | | | | |
| | EGtBE (bp 152°C) | | | | | | | | | | |
| | EGHE (bp 208°C) | | | | | | | | | | |
| | DEGME (bp 194°C) | | | | | | | | | | |
| | DEGEE (bp 202°C) | | | | | | | | | | |
| Glycol ether (c-1) | DEGiPE (bp 210°C) | 16.0 | 16.0 | 16.0 | 16.0 | 16.0 | 16.0 | 16.0 | 16.0 | 16.0 | 16.0 |
| | DEGBE (bp 230°C) | | | | | | | | | | |
| | DEGiBE (bp 229°C) | | | | | | | | | | |
| | PGME (bp 120°C) | | | | | | | | | | |
| | PGEE (bp 132°C) | | | | | | | | | | |
| | PGPE (bp 149°C) | | | | | | | | | | |
| | PGBE (bp 170°C) | | | | | | | | | | |
| | DPGME (bp 188°C) | | | | | | | | | | |
| | TEGME (bp 248°C) | | | | | | | | | | |
| Alkanediol (c-2) | PG (bp 188°C) | 11.0 | 11.0 | 11.0 | 11.0 | 11.0 | 11.0 | 11.0 | 11.0 | 11.0 | 11.0 |
| | 1,2-BD (bp 194°C) | | | | | | | | | | |
| | 1,2-HD (bp 223°C) | | | | | | | | | | |
| Other organic solvents | DEGHE (bp 259°C) | | | | | | | | | | |
| | DEGDEE (bp 189°C) | | | | | | | | | | |
| | EGMEA (bp 145°C) | | | | | | | | | | |
| | GL (bp 290°C) | | | | | | | | | | |
| Surfactant (D) | BYK-345 | 0.25 | 0.25 | 0.25 | 0.25 | 0.25 | 0.25 | 0.25 | 0.25 | 0.25 | 0.25 |
| | BYK-347 | | | | | | | | | | |
| | BYK-333 | | | | | | | | | | |
| | KF-351A | | | | | | | | | | |
| | KF-6011 | | | | | | | | | | |
| Other surfactant | EMULGEN 106 | | | | | | | | | | |
| Aqueous dispersion liquid of resin particles A | | 3.0 | 3.0 | 3.0 | 3.0 | 3.0 | 3.0 | 3.0 | 3.0 | 3.0 | 3.0 |
| Other components | HITEC E-6314 | 1.8 | 1.8 | 1.8 | 1.8 | 1.8 | 1.8 | 1.8 | 1.8 | 1.8 | 1.8 |
| | Urea | 3.0 | 3.0 | 3.0 | 3.0 | 3.0 | 3.0 | 3.0 | 3.0 | 3.0 | 3.0 |
| | PVP K-15 | 0.1 | 0.1 | 0.1 | 0.1 | 0.1 | 0.1 | 0.1 | 0.1 | 0.1 | 0.1 |
| | SNOWTEX XS | 0.1 | 0.1 | 0.1 | 0.1 | 0.1 | 0.1 | 0.1 | 0.1 | 0.1 | 0.1 |
| Water | | Remaining amount | Remaining amount | Remaining amount | Remaining amount | Remaining amount | Remaining amount | Remaining amount | Remaining amount | Remaining amount | Remaining amount |
| Content mass ratio [(c-1)/(B)] | | 16.00 | 16.00 | 16.00 | 16.00 | 16.00 | 16.00 | 16.00 | 16.00 | 16.00 | 16.00 |
| Content of (A)/HLB of (A) | | 0.156 | 0.208 | 0.208 | 0.156 | 0.156 | 0.156 | 0.132 | 0.156 | 0.156 | 0.156 |
| Content of (B)/HLB of (B) | | 0.076 | 0.076 | 0.076 | 0.076 | 0.076 | 0.076 | 0.076 | 0.123 | 0.071 | 0.069 |
| Magenta ink No. | | M1 | M2 | M3 | M4 | M5 | M6 | M7 | M8 | M9 | M10 |
| Evaluation resultsrhk | Graininess | A | A | A | A | A | A | A | A | A | A |
| | Intercolor mixture | A | A | A | A | A | A | A | A | A | A |

**[Table 2]**

| | | Example 11 | Example 12 | Example 13 | Example 14 | Example 15 | Example 16 | Example 17 | Example 18 | Example 19 | Example 20 |
|---|---|---|---|---|---|---|---|---|---|---|---|
| Cyan ink No. | | C11 | C12 | C13 | C14 | C15 | C16 | C17 | C18 | C19 | C20 |
| Cyan pigment dispersion liquid | | 3.0 | 3.0 | 3.0 | 3.0 | 3.0 | 3.0 | 3.0 | 3.0 | 3.0 | 3.0 |
| | S440 with HLB value of 8 | | | | | | | | | | |
| | SE with HLB value of 6 | | | | | | | | | | |
| | SE-F with HLB value of 6 | | | | | | | | | | |
| | D604 with HLB value of 8 | 1.25 | 1.25 | 1.25 | 1.25 | 1.25 | 1.25 | 1.25 | 1.25 | 1.25 | 1.25 |
| | D607 with HLB value of 8 | | | | | | | | | | |
| | S2502 with HLB value of 8 | | | | | | | | | | |
| Surfactant (A) | PD-002W with HLB value of 9.5 | | | | | | | | | | |
| | S104 with HLB value of 4 | | | | | | | | | | |
| | S465 with HLB value of 13 | | | | | | | | | | |
| | S485 with HLB value of 17 | | | | | | | | | | |
| | E1010 with HLB value of 13.5 | | | | | | | | | | |
| Surfactant (B) | TMN-3 with HLB value of 8.1 | | | | | | | | | | |
| | TMN-6 with HLB value of 13.1 | | 1.00 | 1.00 | 1.00 | 1.00 | 1.00 | 1.00 | 1.00 | 1.00 | 1.00 |
| | TMN-100X with HLB value of 14.0 | | | | | | | | | | |
| | TMN-10 with HLB value of 14.4 | | | | | | | | | | |
| | HW-1000 with HLB value of 10.8 | 1.00 | | | | | | | | | |
| | EGiPE (bp 141°C) | | 16.0 | | | | | | | | |
| | EGPE (bp 151°C) | | | 16.0 | | | | | | | |
| | EGtBE (bp 152°C) | | | | 16.0 | | | | | | |
| | EGHE (bp 208°C) | | | | | 20 | | | | | |
| | DEGME (bp 194°C) | | | | | | 16.0 | | | | |
| | DEGEE (bp 202°C) | | | | | | | 16.0 | | | |
| | DEGiPE (bp 210°C) | 16.0 | | | | | | | | | |
| | DEGBE (bp 230°C) | | | | | | | | 16.0 | | |
| Glycol ether (c-1) | DEGiBE (bp 229°C) | | | | | | | | | 16.0 | |
| | PGME (bp 120°C) | | | | | | | | | | 16.0 |
| | PGEE (bp 132°C) | | | | | | | | | | |
| | PGPE (bp 149°C) | | | | | | | | | | |
| | PGBE (bp 170°C) | | | | | | | | | | |
| | DPGME (bp 188°C) | | | | | | | | | | |
| | TEGME (bp 248°C) | | | | | | | | | | |
| Alkanediol (c-2) | PG (bp 188°C) | 11.0 | 11.0 | 11.0 | 11.0 | 11.0 | 11.0 | 11.0 | 11.0 | 11.0 | 11.0 |
| | 1,2-BD (bp 194°C) | | | | | | | | | | |
| | 1,2-HD (bp 223°C) | | | | | | | | | | |
| Other organic solvents | DEGHE (bp 259°C) | | | | | | | | | | |
| | DEGDEE (bp 189°C) | | | | | | | | | | |
| | EGMEA (bp 145°C) | | | | | | | | | | |
| | GL (bp 290°C) | | | | | | | | | | |
| Surfactant (D) | BYK-345 | 0.25 | 0.25 | 0.25 | 0.25 | 0.25 | 0.25 | 0.25 | 0.25 | 0.25 | 0.25 |
| | BYK-347 | | | | | | | | | | |
| | BYK-333 | | | | | | | | | | |
| | KF-351A | | | | | | | | | | |
| | KF-6011 | | | | | | | | | | |
| Other surfactant | EMULGEN 106 | | | | | | | | | | |
| Aqueous dispersion liquid of resin particles A | | 3.0 | 3.0 | 3.0 | 3.0 | 3.0 | 3.0 | 3.0 | 3.0 | 3.0 | 3.0 |
| Other components | HITEC E-6314 | 1.8 | 1.8 | 1.8 | 1.8 | 1.8 | 1.8 | 1.8 | 1.8 | 1.8 | 1.8 |
| | Urea | 3.0 | 3.0 | 3.0 | 3.0 | 3.0 | 3.0 | 3.0 | 3.0 | 3.0 | 3.0 |
| | PVP K-15 | 0.1 | 0.1 | 0.1 | 0.1 | 0.1 | 0.1 | 0.1 | 0.1 | 0.1 | 0.1 |
| | SNOWTEX XS | 0.1 | 0.1 | 0.1 | 0.1 | 0.1 | 0.1 | 0.1 | 0.1 | 0.1 | 0.1 |
| Water | | Remaining amount | Remaining amount | Remaining amount | Remaining amount | Remaining amount | Remaining amount | Remaining amount | Remaining amount | Remaining amount | Remaining amount |
| Content mass ratio [(c-1)/(B)] | | 16.00 | 16.00 | 16.00 | 16.00 | 2.00 | 16.00 | 16.00 | 16.00 | 16.00 | 16.00 |
| Content of (A)/HLB of (A) | | 0.156 | 0.156 | 0.156 | 0.156 | 0.156 | 0.156 | 0.156 | 0.156 | 0.156 | 0.156 |
| Content of (B)/HLB of (B) | | 0.093 | 0.076 | 0.076 | 0.076 | 0.076 | 0.076 | 0.076 | 0.076 | 0.076 | 0.076 |
| Magenta ink No. | | M11 | M12 | M13 | M14 | M15 | M16 | M17 | M18 | M19 | M20 |
| Evaluation results | Graininess | A | A | A | A | A | A | A | A | A | A |
| | Intercolor mixture | A | A | A | A | A | A | A | A | A | A |

**[Table 3]**

| | | Example 21 | Example 22 | Example 23 | Example 24 | Example 25 | Example 26 | Example 27 | Example 28 | Example 29 | Example 30 |
|---|---|---|---|---|---|---|---|---|---|---|---|
| Cyan ink No. | | C21 | C22 | C23 | C24 | C25 | C26 | C27 | C28 | C29 | C30 |
| Cyan pigment dispersion liquid | | 3.0 | 3.0 | 3.0 | 3.0 | 3.0 | 3.0 | 3.0 | 3.0 | 3.0 | 3.0 |
| | S440 with HLB value of 8 | | | | | | | | | | |
| | SE with HLB value of 6 | | | | | | | | | | |
| | SE-F with HLB value of 6 | | | | | | | | | | |
| | D604 with HLB value of 8 | 1.25 | 1.25 | 1.25 | 1.25 | | | | | 1.25 | 1.25 |
| | D607 with HLB value of 8 | | | | | | | | | | |
| | S2502 with HLB value of 8 | | | | | | | | | | |
| Surfactant (A) | PD-002W with HLB value of 9.5 | | | | | | | | | | |
| | S104 with HLB value of 4 | | | | | 1.25 | | | | | |
| | S465 with HLB value of 13 | | | | | | 1.25 | | | | |
| | S485 with HLB value of 17 | | | | | | | 1.25 | | | |
| | E1010 with HLB value of 13.5 | | | | | | | | 1.25 | | |
| Surfactant (B) | TMN-3 with HLB value of 8.1 | | | | | | | | | | |
| | TMN-6 with HLB value of 13.1 | 1.00 | 1.00 | 1.00 | 1.00 | 1.00 | 1.00 | 1.00 | 1.00 | 2.50 | 1.50 |
| | TMN-100X with HLB value of 14.0 | | | | | | | | | | |
| | TMN-10 with HLB value of 14.4 | | | | | | | | | | |
| | HW-1000 with HLB value of 10.8 | | | | | | | | | | |
| | EGiPE (bp 141°C) | | | | | | | | | | |
| | EGPE (bp 151°C) | | | | | | | | | | |
| | EGtBE (bp 152°C) | | | | | | | | | | |
| | EGHE (bp 208°C) | | | | | | | | | | |
| | DEGME (bp 194°C) | | | | | | | | | | |
| | DEGEE (bp 202°C) | | | | | | | | | | |
| Glycol ether (c-1) | DEGiPE (bp 210°C) | | | | | 16.0 | 16.0 | 16.0 | 16.0 | 2.5 | 3.0 |
| | DEGBE (bp 230°C) | | | | | | | | | | |
| | DEGiBE (bp 229°C) | | | | | | | | | | |
| | PGME (bp 120°C) | | | | | | | | | | |
| | PGEE (bp 132°C) | 16.0 | | | | | | | | | |
| | PGPE (bp 149°C) | | 16.0 | | | | | | | | |
| | PGBE (bp 170°C) | | | 60 | | | | | | | |
| | DPGME (bp 188°C) | | | | 16.0 | | | | | | |
| | TEGME (bp 248°C) | | | | | | | | | | |
| Alkanediol (c-2) | PG (bp 188°C) | 11.0 | 11.0 | 11.0 | 11.0 | 11.0 | 11.0 | 11.0 | 11.0 | 24.0 | 24.0 |
| | 1,2-BD (bp 194°C) | | | | | | | | | | |
| | 1,2-HD (bp 223°C) | | | | | | | | | | |
| Other organic solvents | DEGHE (bp 259°C) | | | | | | | | | | |
| | DEGDEE (bp 189°C) | | | | | | | | | | |
| | EGMEA (bp 145°C) | | | | | | | | | | |
| | GL (bp 290°C) | | | | | | | | | | |
| Surfactant (D) | BYK-345 | 0.25 | 0.25 | 0.25 | 0.25 | 0.25 | 0.25 | 0.25 | 0.25 | 0.25 | 0.25 |
| | BYK-347 | | | | | | | | | | |
| | BYK-333 | | | | | | | | | | |
| | KF-351A | | | | | | | | | | |
| | KF-6011 | | | | | | | | | | |
| Other surfactant | EMULGEN 106 | | | | | | | | | | |
| Aqueous dispersion liquid of resin particles A | | 3.0 | 3.0 | 3.0 | 3.0 | 3.0 | 3.0 | 3.0 | 3.0 | 3.0 | 3.0 |
| Other components | HITEC E-6314 | 1.8 | 1.8 | 1.8 | 1.8 | 1.8 | 1.8 | 1.8 | 1.8 | 1.8 | 1.8 |
| | Urea | 3.0 | 3.0 | 3.0 | 3.0 | 3.0 | 3.0 | 3.0 | 3.0 | 3.0 | 3.0 |
| | PVP K-15 | 0.1 | 0.1 | 0.1 | 0.1 | 0.1 | 0.1 | 0.1 | 0.1 | 0.1 | 0.1 |
| | SNOWTEX XS | 0.1 | 0.1 | 0.1 | 0.1 | 0.1 | 0.1 | 0.1 | 0.1 | 0.1 | 0.1 |
| Water | | Remaining amount | Remaining amount | Remaining amount | Remaining amount | Remaining amount | Remaining amount | Remaining amount | Remaining amount | Remaining amount | Remaining amount |
| Content mass ratio [(c-1)/(B)] | | 16.00 | 16.00 | 6.00 | 16.00 | 16.00 | 16.00 | 16.00 | 16.00 | 1.00 | 2.00 |
| Content of (A)/HLB of (A) | | 0.156 | 0.156 | 0.156 | 0.156 | 0.313 | 0.096 | 0.074 | 0.093 | 0.156 | 0.156 |
| Content of (B)/HLB of (B) | | 0.076 | 0.076 | 0.076 | 0.076 | 0.076 | 0.076 | 0.076 | 0.076 | 0.191 | 0.115 |
| Magenta ink No. | | M21 | M22 | M23 | M24 | M25 | M26 | M27 | M28 | M29 | M30 |
| Evaluation results | Graininess | A | A | A | A | A | B | B | B | A | A |
| | Intercolor mixture | A | A | A | A | A | A | A | A | B | A |

**[Table 4]**

| | | Example 31 | Example 32 | Example 33 | Example 34 | Example 35 | Example 36 | Example 37 | Example 38 | Example 39 | Example 40 |
|---|---|---|---|---|---|---|---|---|---|---|---|
| Cyan ink No. | | C31 | C32 | C33 | C34 | C35 | C36 | C37 | C38 | C39 | C40 |
| Cyan pigment dispersion liquid | | 3.0 | 3.0 | 3.0 | 3.0 | 3.0 | 3.0 | 3.0 | 3.0 | 3.0 | 3.0 |
| | S440 with HLB value of 8 | | | | | | | | | | |
| | SE with HLB value of 6 | | | | | | | | | | |
| | SE-F with HLB value of 6 | | | | | | | | | | |
| | D604 with HLB value of 8 | 1.25 | 1.25 | 1.25 | 1.25 | 1.25 | 1.25 | 1.25 | 1.25 | 1.25 | 1.25 |
| | D607 with HLB value of 8 | | | | | | | | | | |
| | S2502 with HLB value of 8 | | | | | | | | | | |
| Surfactant (A) | PD-002W with HLB value of 9.5 | | | | | | | | | | |
| | S104 with HLB value of 4 | | | | | | | | | | |
| | S465 with HLB value of 13 | | | | | | | | | | |
| | S485 with HLB value of 17 | | | | | | | | | | |
| | E1010 with HLB value of 13.5 | | | | | | | | | | |
| Surfactant (B) | TMN-3 with HLB value of 8.1 | | | | | | 0.20 | | | | |
| | TMN-6 with HLB value of 13.1 | 1.00 | 1.00 | 1.00 | 1.00 | 0.90 | | 0.60 | 1.80 | 2.50 | 3.00 |
| | TMN-100X with HLB value of 14.0 | | | | | | | | | | |
| | TMN-10 with HLB value of 14.4 | | | | | | | | | | |
| | HW-1000 with HLB value of 10.8 | | | | | | | | | | |
| | EGiPE (bp 141°C) | | | | | | | | | | |
| | EGPE (bp 151°C) | | | | | | | | | | |
| | EGtBE (bp 152°C) | | | | | | | | | | |
| | EGHE (bp 208°C) | | | | | | | | | | |
| | DEGME (bp 194°C) | | | | | | | | | | |
| | DEGEE (bp 202°C) | | | | | | | | | | |
| | DEGiPE (bp 210°C) | 5.0 | 10.0 | 22.0 | 28.0 | 28.0 | 3.0 | 16.0 | 16.0 | 16.0 | 16.0 |
| Glycol ether (c-1) | DEGBE (bp 230°C) | | | | | | | | | | |
| | DEGiBE (bp 229°C) | | | | | | | | | | |
| | PGME (bp 120°C) | | | | | | | | | | |
| | PGEE (bp 132°C) | | | | | | | | | | |
| | PGPE (bp 149°C) | | | | | | | | | | |
| | PGBE (bp 170°C) | | | | | | | | | | |
| | DPGME (bp 188°C) | | | | | | | | | | |
| | TEGME (bp 248°C) | | | | | | | | | | |
| Alkanediol (c-2) | PG (bp 188°C) | 22.0 | 17.0 | 5.0 | 4.0 | 4.0 | 24.0 | 11.0 | 11.0 | 11.0 | 11.0 |
| | 1,2-BD (bp 194°C) | | | | | | | | | | |
| | 1,2-HD (bp 223°C) | | | | | | | | | | |
| Other organic solvents | DEGHE (bp 259°C) | | | | | | | | | | |
| | DEGDEE (bp 189°C) | | | | | | | | | | |
| | EGMEA (bp 145°C) | | | | | | | | | | |
| | GL (bp 290°C) | | | | | | | | | | |
| Surfactant (D) | BYK-345 | 0.25 | 0.25 | 0.25 | 0.25 | 0.25 | 0.25 | 0.25 | 0.25 | 0.25 | 0.25 |
| | BYK-347 | | | | | | | | | | |
| | BYK-333 | | | | | | | | | | |
| | KF-351A | | | | | | | | | | |
| | KF-6011 | | | | | | | | | | |
| Other surfactant | EMULGEN 106 | | | | | | | | | | |
| Aqueous dispersion liquid of resin particles A | | 3.0 | 3.0 | 3.0 | 3.0 | 3.0 | 3.0 | 3.0 | 3.0 | 3.0 | 3.0 |
| Other components | HITEC E-6314 | 1.8 | 1.8 | 1.8 | 1.8 | 1.8 | 1.8 | 1.8 | 1.8 | 1.8 | 1.8 |
| | Urea | 3.0 | 3.0 | 3.0 | 3.0 | 3.0 | 3.0 | 3.0 | 3.0 | 3.0 | 3.0 |
| | PVP K-15 | 0.1 | 0.1 | 0.1 | 0.1 | 0.1 | 0.1 | 0.1 | 0.1 | 0.1 | 0.1 |
| | SNOWTEX XS | 0.1 | 0.1 | 0.1 | 0.1 | 0.1 | 0.1 | 0.1 | 0.1 | 0.1 | 0.1 |
| Water | | Remaining amount | Remaining amount | Remaining amount | Remaining amount | Remaining amount | Remaining amount | Remaining amount | Remaining amount | Remaining amount | Remaining amount |
| Content mass ratio [(c-1)/(B)] | | 500 | 10.00 | 22.00 | 28.00 | 31.11 | 15.00 | 26.67 | 8.89 | 6.40 | 5.33 |
| Content of (A)/HLB of (A) | | 0.156 | 0.156 | 0.156 | 0.156 | 0.156 | 0.156 | 0.156 | 0.156 | 0.156 | 0.156 |
| Content of (B)/HLB of (B) | | 0.076 | 0.076 | 0.076 | 0.076 | 0.069 | 0.025 | 0.046 | 0.137 | 0.191 | 0.229 |
| Magenta ink No. | | M31 | M32 | M33 | M34 | M35 | M36 | M37 | M38 | M39 | M40 |
| Evaluation results | Graininess | A | A | A | A | A | B | A | A | A | A |
| | Intercolor mixture | A | A | A | A | B | A | A | A | A | B |

**[Table 5]**

| | | Example 41 | Example 42 | Example 43 | Example 44 | Example 45 | Example 46 | Example 47 | Example 48 | Example 49 | Example 50 |
|---|---|---|---|---|---|---|---|---|---|---|---|
| Cyan ink No. | | C41 | C42 | C43 | C44 | C45 | C46 | C47 | C48 | C49 | C50 |
| Cyan pigment dispersion liquid | | 3.0 | 3.0 | 3.0 | 3.0 | 3.0 | 3.0 | 3.0 | 3.0 | 3.0 | 3.0 |
| | S440 with HLB value of 8 | | | | | | | | | | |
| | SE with HLB value of 6 | | | | | | | | | 2.50 | |
| | SE-F with HLB value of 6 | | | 0.25 | | | | | | | |
| | D604 with HLB value of 8 | 1.25 | 1.25 | | 0.75 | 2.00 | 2.50 | 3.00 | | | 1.25 |
| | D607 with HLB value of 8 | | | | | | | | | | |
| | S2502 with HLB value of 8 | | | | | | | | | | |
| Surfactant (A) | PD-002W with HLB value of 9.5 | | | | | | | | 0.30 | | |
| | S104 with HLB value of 4 | | | | | | | | | | |
| | S465 with HLB value of 13 | | | | | | | | | | |
| | S485 with HLB value of 17 | | | | | | | | | | |
| | E1010 with HLB value of 13.5 | | | | | | | | | | |
| Surfactant (B) | TMN-3 with HLB value of 8.1 | | | | | | | | | | |
| | TMN-6 with HLB value of 13.1 | 0.80 | 1.20 | 1.00 | 1.00 | 1.00 | 1.00 | 1.00 | 1.20 | 1.20 | |
| | TMN-100X with HLB value of 14.0 | | | | | | | | | | |
| | TMN-10 with HLB value of 14.4 | | | | | | | | | | 0.30 |
| | HW-1000 with HLB value of 10.8 | | | | | | | | | | |
| | EGiPE (bp 141°C) | | | | | | | | | | |
| | EGPE (bp 151°C) | | | | | | | | | | |
| | EGtBE (bp 152°C) | | | | | | | | | | |
| | EGHE (bp 208°C) | | | | | | | | | | |
| | DEGME (bp 194°C) | | | | | | | | | | |
| | DEGEE (bp 202°C) | | | | | | | | | | |
| | DEGiPE (bp 210°C) | 1.5 | 32.0 | 16.0 | 16.0 | 16.0 | 16.0 | 16.0 | 16.0 | 16.0 | 16.0 |
| Glycol ether (c-1) | DEGBE (bp 230°C) | | | | | | | | | | |
| | DEGiBE (bp 229°C) | | | | | | | | | | |
| | PGME (bp 120°C) | | | | | | | | | | |
| | PGEE (bp 132°C) | | | | | | | | | | |
| | PGPE (bp 149°C) | | | | | | | | | | |
| | PGBE (bp 170°C) | | | | | | | | | | |
| | DPGME (bp 188°C) | | | | | | | | | | |
| | TEGME (bp 248°C) | | | | | | | | | | |
| Alkanediol (c-2) | PG (bp 188°C) | 25.5 | 2.0 | 11.0 | 11.0 | 11.0 | 11.0 | 11.0 | 11.0 | 11.0 | 11.0 |
| | 1,2-BD (bp 194°C) | | | | | | | | | | |
| | 1,2-HD (bp 223°C) | | | | | | | | | | |
| Other organic solvents | DEGHE (bp 259°C) | | | | | | | | | | |
| | DEGDEE (bp 189°C) | | | | | | | | | | |
| | EGMEA (bp 145°C) | | | | | | | | | | |
| | GL (bp 290°C) | | | | | | | | | | |
| Surfactant (D) | BYK-345 | 0.25 | 0.25 | 0.25 | 0.25 | 0.25 | 0.25 | 0.25 | 0.25 | 0.25 | 0.25 |
| | BYK-347 | | | | | | | | | | |
| | BYK-333 | | | | | | | | | | |
| | KF-351A | | | | | | | | | | |
| | KF-6011 | | | | | | | | | | |
| Other surfactant | EMULGEN 106 | | | | | | | | | | |
| Aqueous dispersion liquid of resin particles A | | 3.0 | 3.0 | 3.0 | 3.0 | 3.0 | 3.0 | 3.0 | 3.0 | 3.0 | 3.0 |
| Other components | HITEC E-6314 | 1.8 | 1.8 | 1.8 | 1.8 | 1.8 | 1.8 | 1.8 | 1.8 | 1.8 | 1.8 |
| | Urea | 3.0 | 3.0 | 3.0 | 3.0 | 3.0 | 3.0 | 3.0 | 3.0 | 3.0 | 3.0 |
| | PVP K-15 | 0.1 | 0.1 | 0.1 | 0.1 | 0.1 | 0.1 | 0.1 | 0.1 | 0.1 | 0.1 |
| | SNOWTEX XS | 0.1 | 0.1 | 0.1 | 0.1 | 0.1 | 0.1 | 0.1 | 0.1 | 0.1 | 0.1 |
| Water | | Remaining amount | Remaining amount | Remaining amount | Remaining amount | Remaining amount | Remaining amount | Remaining amount | Remaining amount | Remaining amount | Remaining amount |
| Content mass ratio [(c-1)/(B)] | | 1.88 | 26.67 | 16.00 | 16.00 | 16.00 | 16.00 | 16.00 | 13.33 | 13.33 | 53.33 |
| Content of (A)/HLB of (A) | | 0.156 | 0.156 | 0.042 | 0.094 | 0.250 | 0.313 | 0.375 | 0.032 | 0.417 | 0.156 |
| Content of (B)/HLB of (B) | | 0.061 | 0.092 | 0.076 | 0.076 | 0.076 | 0.076 | 0.076 | 0.092 | 0.092 | 0.021 |
| Magenta ink No. | | M41 | M42 | M43 | M44 | M45 | M46 | M47 | M48 | M49 | M50 |
| Evaluation results | Graininess | A | A | B | A | A | A | A | B | A | B |
| | Intercolor mixture | B | B | A | A | A | A | B | A | B | A |

**[Table 6]**

| | | Example 51 | Example 52 | Example 53 | Example 54 | Example 55 | Example 56 | Example 57 | Example 58 | Example 59 |
|---|---|---|---|---|---|---|---|---|---|---|
| Cyan ink No. | | C51 | C52 | C53 | C54 | C55 | C56 | C57 | C58 | C59 |
| Cyan pigment dispersion liquid | | 3.0 | 3.0 | 3.0 | 3.0 | 3.0 | 3.0 | 3.0 | 3.0 | 3.0 |
| | S440 with HLB value of 8 | | | | | | | | | |
| | SE with HLB value of 6 | | | | | | | | | |
| | SE-F with HLB value of 6 | | | | | | | | | |
| | D604 with HLB value of 8 | 1.25 | 1.25 | 1.25 | 1.25 | 1.25 | 1.25 | 1.25 | 0.75 | 1.25 |
| | D607 with HLB value of 8 | | | | | | | | | |
| Surfactant (A) | S2502 with HLB value of 8 | | | | | | | | | |
| | PD-002W with HLB value of 9.5 | | | | | | | | | |
| | S104 with HLB value of 4 | | | | | | | | | |
| | S465 with HLB value of 13 | | | | | | | | | |
| | S485 with HLB value of 17 | | | | | | | | | |
| | E1010 with HLB value of 13.5 | | | | | | | | | |
| Surfactant (B) | TMN-3 with HLB value of 8.1 | 250 | | | | | | | | |
| | TMN-6 with HLB value of 13.1 | | 1.00 | 1.00 | 1.00 | 1.00 | 1.00 | 1.00 | 1.00 | 1.00 |
| | TMN-100X with HLB value of 14.0 | | | | | | | | | |
| | TMN-10 with HLB value of 14.4 | | | | | | | | | |
| | HW-1000 with HLB value of 10.8 | | | | | | | | | |
| | EGiPE (bp 141°C) | | | | | | | | | |
| | EGPE (bp 151°C) | | | | | | | | | |
| | EGtBE (bp 152°C) | | | | | | | | | |
| | EGHE (bp 208°C) | | | | | | | | | |
| | DEGME (bp 194°C) | | | | | | | | | 25.0 |
| | DEGEE (bp 202°C) | | | | | | | | | |
| | DEGiPE (bp 210°C) | 16.0 | | 28.0 | 16.0 | 16.0 | 16.0 | 16.0 | 16.0 | |
| Glycol ether (c-1) | DEGBE (bp 230°C) | | | | | | | | | |
| | DEGiBE (bp 229°C) | | | | | | | | | |
| | PGME (bp 120°C) | | | | | | | | | |
| | PGEE (bp 132°C) | | | | | | | | | |
| | PGPE (bp 149°C) | | | | | | | | | |
| | PGBE (bp 170°C) | | | | | | | | | |
| | DPGME (bp 188°C) | | | | | | | | | |
| | TEGME (bp 248°C) | | 16.0 | | | | | | | |
| Alkanediol (c-2) | PG (bp 188°C) | 11.0 | 11.0 | 15.0 | 11.0 | 11.0 | 11.0 | 11.0 | *4.0* | |
| | 1,2-BD (bp 194°C) | | | | | | | | 4.0 | |
| | 1,2-HD (bp 223°C) | | | | | | | | 3.0 | |
| Other organic solvents | DEGHE (bp 259°C) | | | | | | | | | |
| | DEGDEE (bp 189°C) | | | | | | | | | |
| | EGMEA (bp 145°C) | | | | | | | | | |
| | GL (bp 290°C) | | | | 7.0 | | | | | |
| Surfactant (D) | BYK-345 | 0.25 | 0.25 | 0.25 | 0.25 | | | 1.50 | 0.20 | |
| | BYK-347 | | | | | | | | 0.20 | |
| | BYK-333 | | | | | | 0.05 | | 0.20 | |
| | KF-351A | | | | | | | | 0.20 | |
| | KF-6011 | | | | | | | | 0.20 | |
| Other surfactant | EMULGEN 106 | | | | | | | | | |
| Aqueous dispersion liquid of resin particles A | | 3.0 | 3.0 | 3.0 | 3.0 | 3.0 | 3.0 | 3.0 | 3.0 | 3.0 |
| Other components | HITEC E-6314 | 1.8 | 1.8 | 1.8 | 1.8 | 1.8 | 1.8 | 1.8 | 1.8 | |
| | Urea | 3.0 | 3.0 | 3.0 | 3.0 | 3.0 | 3.0 | 3.0 | 3.0 | |
| | PVP K-15 | 0.1 | 0.1 | 0.1 | 0.1 | 0.1 | 0.1 | 0.1 | 0.1 | |
| | SNOWTEX XS | 0.1 | 0.1 | 0.1 | 0.1 | 0.1 | 0.1 | 0.1 | 0.1 | |
| Water | | Remaining amount | Remaining amount | Remaining amount | Remaining amount | Remaining amount | Remaining amount | Remaining amount | Remaining amount | Remaining amount |
| Content mass ratio [(c-1)/(B)] | | 6.40 | 16.00 | 28.00 | 16.00 | 16.00 | 16.00 | 16.00 | 16.00 | 25.00 |
| Content of (A)/HLB of (A) | | 0.156 | 0.156 | 0.156 | 0.156 | 0.156 | 0.156 | 0.156 | 0.094 | 0.156 |
| Content of (B)/HLB of (B) | | 0.309 | 0.076 | 0.076 | 0.076 | 0.076 | 0.076 | 0.076 | 0.076 | 0.076 |
| Magenta ink No. | | M51 | M52 | M53 | M54 | M55 | M56 | M57 | M58 | M59 |
| Evaluation results | Graininess | A | A | A | A | A | A | A | A | B |
| | Intercolor mixture | B | B | B | B | B | A | A | A | B |

**[Table 7]**

| Cyan ink No. | | Comparative Example 1 | Comparative Example 2 | Comparative Example 3 | Comparative Example 4 | Comparative Example 5 | Comparative Example 6 | Comparative Example 7 | Example 60 | Example 61 |
|---|---|---|---|---|---|---|---|---|---|---|
| Cyan ink No. | | C60 | C61 | C62 | C63 | C64 | C65 | C66 | C4 | C4 |
| Cyan pigment dispersion liquid | | 3.0 | 3.0 | 3.0 | 3.0 | 3.0 | 3.0 | 3.0 | 3.0 | 3.0 |
| | S440 with HLB value of 8 | | | | | | | | | |
| | SE with HLB value of 6 | | | | | | | | | |
| | SE-F with HLB value of 6 | | | | | | | | | |
| | D604 with HLB value of 8 | | 1.25 | 1.25 | | | 1.25 | 1.25 | 1.25 | 1.25 |
| | D607 with HLB value of 8 | | | | | | | | | |
| | S2502 with HLB value of 8 | | | | | | | | | |
| Surfactant (A) | PD-002W with HLB value of 9.5 | | | | | | | | | |
| | S104 with HLB value of 4 | | | | 1.25 | | | | | |
| | S465 with HLB value of 13 | | | | | | | | | |
| | S485 with HLB value of 17 | | | | | | | | | |
| | E1010 with HLB value of 13.5 | | | | | 1.25 | | | | |
| Surfactant (B) | TMN-3 with HLB value of 8.1 | | | | | | | | | |
| | TMN-6 with HLB value of 13.1 | 1.00 | | | 1.00 | 1.00 | 1.00 | 1.00 | 1.00 | 1.00 |
| | TMN-100X with HLB value of 14.0 | | | | | | | | | |
| | TMN-10 with HLB value of 14.4 | | | | | | | | | |
| | HW-1000 with HLB value of 10.8 | | | | | | | | | |
| | EGiPE (bp 141°C) | | | | | | | | | |
| | EGPE (bp 151°C) | | | | | | | | | |
| | EGtBE (bp 152°C) | | | | | | | | | |
| | EGHE (bp 208°C) | | | | | | | | | |
| | DEGME (bp 194°C) | | | | | | | | | |
| | DEGEE (bp 202°C) | | | | | | | | | |
| | DEGiPE (bp 210°C) | 16.0 | 16.0 | 16.0 | | | | | 16.0 | 16.0 |
| Glycol ether (c-1) | DEGBE (bp 230°C) | | | | | | | | | |
| | DEGiBE (bp 229°C) | | | | | | | | | |
| | PGME (bp 120°C) | | | | | | | | | |
| | PGEE (bp 132°C) | | | | | | | | | |
| | PGPE (bp 149°C) | | | | | | | | | |
| | PGBE (bp 170°C) | | | | | | | | | |
| | DPGME (bp 188°C) | | | | | | | | | |
| | TEGME (bp 248°C) | | | | | | | | | |
| Alkanediol (c-2) | PG (bp 188°C) | 11.0 | 11.0 | 11.0 | 27.0 | 17.0 | 27.0 | 11.0 | 11.0 | 11.0 |
| | 1,2-BD (bp 194°C) | | | | | | | | | |
| | 1,2-HD (bp 223°C) | | | | | | | | | |
| Other organic solvents | DEGHE (bp 259°C) | | | | | | | 16.0 | | |
| | DEGDEE (bp 189°C) | | | | | 5.0 | | | | |
| | EGMEA (bp 145°C) | | | | | 5.0 | | | | |
| | GL (bp 290°C) | | | | | | | | | |
| Surfactant (D) | BYK-345 | 1.50 | 0.25 | 0.25 | 0.25 | 0.25 | 0.25 | 0.25 | 0.25 | 0.25 |
| | BYK-347 | | | | | | | | | |
| | BYK-333 | | | | | | | | | |
| | KF-351A | | | | | | | | | |
| | KF-6011 | | | | | | | | | |
| Other surfactant | EMULGEN 106 | | 1.00 | | | | | | | |
| Aqueous dispersion liquid of resin particles A | | 3.0 | 3.0 | 3.0 | 3.0 | 3.0 | 3.0 | 3.0 | 3.0 | 3.0 |
| Other components | HITEC E-6314 | 1.8 | 1.8 | 1.8 | 1.8 | 1.8 | 1.8 | 1.8 | 1.8 | 1.8 |
| | Urea | 3.0 | 3.0 | 3.0 | 3.0 | 3.0 | 3.0 | 3.0 | 3.0 | 3.0 |
| | PVP K-15 | 0.1 | 0.1 | 0.1 | 0.1 | 0.1 | 0.1 | 0.1 | 0.1 | 0.1 |
| | SNOWTEX XS | 0.1 | 0.1 | 0.1 | 0.1 | 0.1 | 0.1 | 0.1 | 0.1 | 0.1 |
| Water | | Remaining amount | Remaining amount | Remaining amount | Remaining amount | Remaining amount | Remaining amount | Remaining amount | Remaining amount | Remaining amount |
| Content mass ratio [(c-1)/(B)] | | 16.00 | - | - | - | - | - | - | 16.00 | 16.00 |
| Content of (A)/HLB of (A) | | 0.000 | 0.156 | 0.156 | 0.313 | 0.093 | 0.156 | 0.156 | 0.156 | 0.156 |
| Content of (B)/HLB of (B) | | 0.076 | 0.000 | 0.000 | 0.076 | 0.076 | 0.076 | 0.076 | 0.076 | 0.076 |
| Magenta ink No. | | M60 | M61 | M62 | M63 | M64 | M65 | M66 | M60 | M63 |
| Evaluation results | Graininess | D | D | D | A | A | A | A | C | A |
| | Intercolor mixture | A | A | A | D | D | D | D | A | C |

As listed in Tables 1 to 7, in Examples 1 to 61 in which the ink containing water, the pigment, the surfactant (A) which was an acetylene glycol-based nonionic surfactant, the surfactant (B) which was a compound represented by Formula (1), and the organic solvent (C), in which the organic solvent (C) contained the glycol ether (c-1) which was at least one selected from the group consisting of an alkylene glycol monoalkyl ether having a boiling point of 250°C or lower and a polyalkylene glycol monoalkyl ether having a boiling point of 250°C or lower was used, an image with excellent graininess and suppressed intercolor mixture was recorded.

In particular, as shown in the results of Examples 60 and 61, it was confirmed that the effects of the improvement of graininess and the suppression of intercolor mixture were obtained even in a case where the ink C4 satisfying the above-described conditions and the ink M60 or M63 not satisfying some of the above-described conditions were used.

The results of the comparative examples are as follows as compared with the examples.

In Comparative Example 1 in which the ink containing no surfactant (A) was used, the graininess of the image was reduced.

Further, in Comparative Examples 2 and 3 in which the inks containing no surfactant (B) were used, the graininess of the image was reduced.

Further, in Comparative Examples 4 to 7 in which the inks containing no glycol ether (c-1) were used, intercolor mixture could not be suppressed.

As shown in the results of Examples 25 to 28, it was found that the graininess was further improved in a case where the HLB value of the surfactant (A) was 4 or greater and 12 or less (Example 25).

As shown in the results of Examples 29 to 35, it was found that the intercolor mixture was further suppressed in a case where the content mass ratio [(c-1)/(B)] was 1.5 or greater and 30 or less (Examples 30 to 34).

As shown in the results of Examples 36 to 40, it was found that the graininess was further improved in a case where the content of the surfactant (B) was 0.30% by mass or greater with respect to the total amount of the ink (Examples 37 to 40).

As shown in the results of Examples 36 to 40, it was found that the intercolor mixture was further suppressed in a case where the content of the surfactant (B) was 2.50% by mass or less with respect to the total amount of the ink (Examples 36 to 39).

As shown in the results of Examples 37 to 39, 41, and 42, it was found that the intercolor mixture was further suppressed in a case where the content of the glycol ether (c-1) was 2.0% by mass or greater and 30.0% by mass or less with respect to the total amount of the ink (Examples 37 to 39).

As shown in the results of Examples 43 to 47, it was found that the graininess was further improved in a case where the content of the surfactant (A) was 0.30% by mass or greater with respect to the total amount of the ink (Examples 44 to 47).

It was found that the intercolor mixture was further suppressed in a case where the content of the surfactant (A) was 2.50% by mass or less with respect to the total amount of the ink (Examples 43 to 46).

As shown in the results of Examples 45 and 48, it was found that the graininess was further improved in a case where the value obtained by dividing the content of the surfactant (A) in units of % by mass with respect to the total amount of the ink by the HLB value of the surfactant (A) (content of (A)/HLB of (A)) was 0.040 or greater (Example 45).

As shown in the results of Examples 45 and 49, it was found that the intercolor mixture was further suppressed in a case where the content of (A) is/HLB of (A) was 0.400 or less (Example 45).

As shown in the results of Examples 45 and 50, it was found that the graininess was further improved in a case where the value obtained by dividing the content of the surfactant (B) in units of % by mass with respect to the total amount of the ink by the HLB value of the surfactant (B) (content of (B)/HLB of (B)) was 0.022 or greater (Example 45).

As shown in the results of Examples 45 and 51, it was found that the intercolor mixture was further suppressed in a case where the content of (B)/HLB of (B) was 0.300 or less (Example 45).

As shown in the results of Examples 11 to 24 and 52, it was found that the intercolor mixture was suppressed in a case where the glycol ether (c-1) was at least one selected from the group consisting of ethylene glycol monoalkyl ether having a boiling point of 250°C or lower, diethylene glycol monoalkyl ether having a boiling point of 250°C or lower, propylene glycol monoalkyl ether having a boiling point of 250°C or lower, and dipropylene glycol monoalkyl ether having a boiling point of 250°C or lower (Examples 11 to 24).

As shown in the results of Examples 45 and 53, it was found that the intercolor mixture was further suppressed in a case where the content of the organic solvent (C) was 10% by mass or greater and 40% by mass or less with respect to the total amount of the ink (Example 45).

As shown in the results of Examples 45 and 54, it was found that the intercolor mixture was further suppressed in a case where the content of the high-boiling-point organic solvent was 5.0% by mass or less with respect to the total amount of the ink (Example 45).

As shown in the results of Examples 45 and 55, it was found that the intercolor mixture was further suppressed in a case where the ink contained the surfactant (D) which was a polyether-modified silicone surfactant (Example 45).

The disclosure of JP2022-034673 filed on March 7, 2022 is incorporated herein by reference in its entirety.

All documents, patent applications, and technical standards described in the present specification are incorporated herein by reference to the same extent as in a case of being specifically and individually noted that individual documents, patent applications, and technical standards are incorporated by reference.

## Claims

1. An inkjet ink comprising:
water;
a pigment;
a surfactant (A) which is an acetylene glycol-based nonionic surfactant;
a surfactant (B) which is a compound represented by Formula (1); and
an organic solvent (C),
wherein the organic solvent (C) includes a glycol ether (c-1) which is at least one selected from the group consisting of an alkylene glycol monoalkyl ether having a boiling point of 250°C or lower and a polyalkylene glycol monoalkyl ether having a boiling point of 250°C or lower, 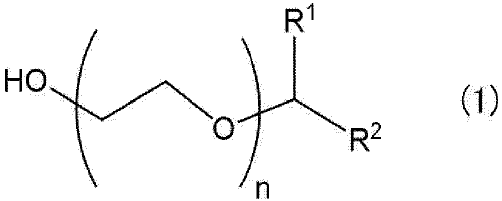
in Formula (1), R¹ and R² each independently represent a branched alkyl group having 3 to 20 carbon atoms, and n represents an integer of 1 to 20.

2. The inkjet ink according to claim 1,
wherein the surfactant (B) is a compound represented by Formula (1-1), 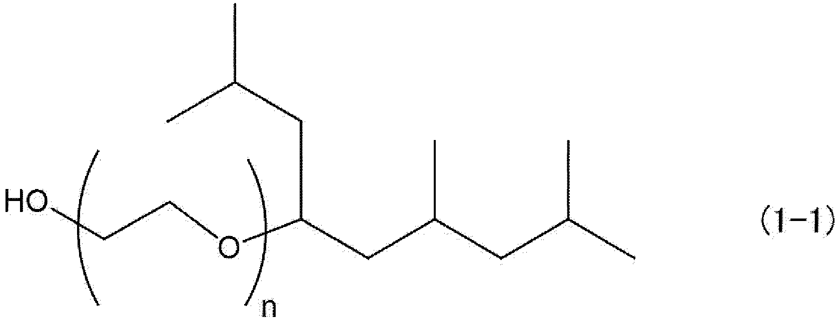
in Formula (1-1), n represents an integer of 1 to 20.

3. The ink jet ink according to claim 1 or 2,
wherein the surfactant (A) has an HLB value of 4 or greater and 12 or less.

4. The ink jet ink according to any one of claims 1 to 3,
wherein a content mass ratio [(c-1)/(B)] which is a ratio of a content mass of the glycol ether (c-1) to a content mass of the surfactant (B) is 1.5 or greater and 30 or less.

5. The ink jet ink according to any one of claims 1 to 4,
wherein a content of the surfactant (B) is 0.30% by mass or greater and 2.50% by mass or less with respect to a total amount of the ink jet ink.

6. The ink jet ink according to any one of claims 1 to 5,
wherein a content of the glycol ether (c-1) is 2.0% by mass or greater and 30.0% by mass or less with respect to a total amount of the ink jet ink.

7. The ink jet ink according to any one of claims 1 to 6,
wherein a content of the surfactant (A) is 0.30% by mass or greater and 2.50% by mass or less with respect to a total amount of the ink jet ink.

8. The ink jet ink according to any one of claims 1 to 7,
wherein a value obtained by dividing a content of the surfactant (A) in units of % by mass with respect to a total amount of the ink jet ink by an HLB value of the surfactant (A) is 0.040 or greater and 0.400 or less.

9. The ink jet ink according to any one of claims 1 to 8,
wherein a value obtained by dividing a content of the surfactant (B) in units of % by mass with respect to a total amount of the ink jet ink by an HLB value of the surfactant (B) is 0.022 or greater and 0.300 or less.

10. The ink jet ink according to any one of claims 1 to 9,
wherein the glycol ether (c-1) is at least one selected from the group consisting of an ethylene glycol monoalkyl ether having a boiling point of 250°C or lower, a diethylene glycol monoalkyl ether having a boiling point of 250°C or lower, a propylene glycol monoalkyl ether having a boiling point of 250°C or lower, and a dipropylene glycol monoalkyl ether having a boiling point of 250°C or lower.

11. The ink jet ink according to any one of claims 1 to 10,
wherein the organic solvent (C) further includes an alkanediol (c-2) which is an alkanediol having 2 or more and 6 or less carbon atoms.

12. The ink jet ink according to any one of claims 1 to 11,
wherein a content of the organic solvent (C) is 10.0% by mass or greater and 40.0% by mass or less with respect to a total amount of the inkjet ink.

13. The ink jet ink according to any one of claims 1 to 12,
wherein the ink jet ink contains no high-boiling-point organic solvent having a boiling point of higher than 250°C, or in a case where the ink jet ink contains the high-boiling-point organic solvent, a content of the high-boiling-point organic solvent is 5.0% by mass or less with respect to a total amount of the inkjet ink.

14. The inkjet ink according to any one of claims 1 to 13, further comprising:
a surfactant (D) which is a polyether-modified silicone surfactant.

15. The ink jet ink according to claim 14,
wherein a content of the surfactant (D) is 0.05% by mass or greater and 1.50% by mass or less with respect to a total amount of the ink jet ink.

16. The inkjet ink according to any one of claims 1 to 15, further comprising:
resin particles.

17. An ink set comprising:
two or more kinds of ink jet inks,
wherein at least one of the two or more kinds of ink jet inks is the ink jet ink according to any one of claims 1 to 16.

18. An ink jet recording method comprising:
a step of applying the ink jet ink according to any one of claims 1 to 16 onto a recording medium by an ink jet method.

19. An ink jet recording method using the ink set according to claim 17, the method comprising:
a step of applying each of the two or more kinds of ink jet inks onto a recording medium by an ink jet method.
